# EUROPEAN PATENT APPLICATION

(11) **EP 4 398 498 A1**
(43) Date of publication of application: **10.07.2024**
(21) Application number: 22863364.0
(22) Date of filing: 29.08.2022
(51) Int. Cl.: H04B 17/30

(54) **DETECTION METHOD AND APPARATUS, AND DEVICE**

(30) Priority: 01.09.2021 CN 202111022704
(71) Applicant: VIVO MOBILE COMMUNICATION CO., LTD., Dongguan, Guangdong 523863 (CN)
(72) Inventor: JIANG, Dajie, Dongguan, Guangdong 523863 (CN); YAO, Jian, Dongguan, Guangdong 523863 (CN); LI, Jianzhi, Dongguan, Guangdong 523863 (CN); LIU, Hao, Dongguan, Guangdong 523863 (CN); DING, Shengli, Dongguan, Guangdong 523863 (CN); QIN, Fei, Dongguan, Guangdong 523863 (CN)
(74) Representative: Lavoix
(86) International application number: PCT/CN2022/115439
(87) International publication number: WO 2023/030228

(57) **Abstract**

This application discloses a detection method and apparatus, and a device. The detection method includes: detecting, by a second device, a sensing signal sent by a first device, to obtain a measurement value corresponding to a measurement quantity of the sensing signal, where the measurement quantity includes at least one of the following: a first measurement quantity including at least one of the following: a frequency-domain channel response, an operation result of corresponding first transform, an amplitude of the frequency-domain channel response, an operation result of the corresponding first transform, a phase, and an operation result of the corresponding first transform; a second measurement quantity including at least one of the following: an operation result of performing a mathematical operation on frequency-domain channel responses of at least two receive antennas, an operation result of corresponding first transform, an amplitude of the operation result, an operation result of corresponding first transform, a phase of the operation result, and an operation result of the corresponding first transform; and a third measurement quantity including at least one of the following: I-channel data and Q-channel data of a frequency-domain channel response, and a result of performing an operation on the I-channel data and the Q-channel data.

## Description

### CROSS-REFERENCE TO RELATED APPLICATIONS

This application claims priority to Chinese Patent Application No. 202111022704.5, filed in China on September 1, 2021, which is incorporated herein by reference in its entirety.

### TECHNICAL FIELD

This application pertains to the communication field, and specifically, relates to a detection method, apparatus, and device.

### BACKGROUND

In addition to having a communication capability, a future mobile communication system such as a beyond fifth generation (Beyond 5^{th} Generation, B5G) communication system or a sixth generation (6^{th} Generation, 6G) further has a sensing capability. One or more devices with the sensing capability can perceive information such as a direction, a distance, and a speed of a target object by sending and receiving a wireless signal, or detect, track, identify, and image a target object, an event, an environment, and the like. In the future, with deployment of a small base station with a capability of a high frequency band and high bandwidth such as millimeter wave and terahertz in the 6G network, sensing resolution is significantly improved compared with a centimeter wave, so that the 6G network can provide a more precise sensing service.

Purpose of sensing are mainly divided into two categories. The first category of purpose is that sensing is used to assist or enhance communication performance, for example, a base station tracks a moving track of a device to provide a more accurate beamforming alignment device. The other category of purpose is sensing that is not directly related to communication. For example, the base station monitors a weather condition by using a wireless signal, and a mobile phone recognizes a gesture of a user through millimeter wave wireless sensing.

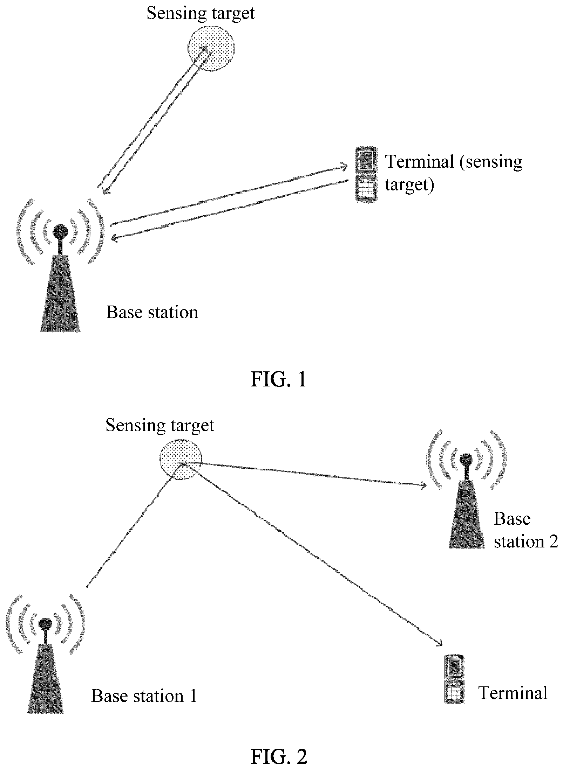

Sensing manners may be classified into the following several manners:
(1) Active sensing: A device performs sensing by using a reflected signal of a signal transmitted by the device, for example, an echo, and a transceiver is located at a same location. Different antennas may be used to perceive environment information around the device, as shown in FIG. 1.
(2) Passive sensing: A transmitter and a receiver are located at different locations, and the receiver perceives a wireless signal transmitted by the transmitter. For example, a base station A perceives, by receiving a wireless signal from a base station B, environment information between the base station A and the base station B, as shown in FIG. 2.
(3) Interactive sensing: A perceiver and a target object reach, through information exchange, an agreement on a subject, time, a frequency, a format, and the like for sending an electromagnetic wave, to complete a sensing process.

In the prior art, there is no related procedure for wireless sensing of a moving object and a solution for setting a related measurement quantity, and this causes an incomplete communication procedure.

### SUMMARY

Embodiments of this application provide a detection method and apparatus, and a device, to resolve a problem in the existing technology that accurate sensing cannot be implemented due to a lack of a related interaction procedure for wireless sensing and a related measurement quantity setting solution.

According to a first aspect, a detection method is provided, and includes:
detecting, by a second device, a sensing signal sent by a first device, to obtain a measurement value corresponding to a measurement quantity of the sensing signal; where
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a second aspect, a detection apparatus is provided, where the detection apparatus is applied to a second device and includes:
a detection module, configured to detect a sensing signal sent by a first device, to obtain a measurement value corresponding to a measurement quantity of the sensing signal; where
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a third aspect, a detection method is provided, and includes:
sending, by a first device, a sensing signal to a second device, where the sensing signal is used by the second device to perform detection, to obtain a measurement value corresponding to a measurement quantity of the sensing signal; where
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a fourth aspect, a detection apparatus is provided, where the detection apparatus is applied to a first device and includes:
a first sending module, configured to send a sensing signal to a second device, where the sensing signal is used by the second device to perform detection, to obtain a measurement value corresponding to a measurement quantity of the sensing signal; where
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a fifth aspect, a detection method is provided, and includes:
sending, by a first core network device, first indication information to a first device or a second device; where
the first indication information is used to indicate a measurement quantity of a sensing signal that needs to be measured by the second device; and
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a sixth aspect, a detection apparatus is provided, where the detection apparatus is applied to a first core network device and includes:
a second sending module, configured to send first indication information to a first device or a second device; where
the first indication information is used to indicate a measurement quantity of a sensing signal that needs to be measured by the second device; and
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a seventh aspect, a device is provided. The device includes a processor, a memory, and a program or an instruction that is stored in the memory and that can be run on the processor, where when the program or the instruction is executed by the processor, steps of the method in the first aspect, the third aspect, or the fifth aspect are implemented.

According to an eighth aspect, a device is provided. The device is a second device and includes a processor and a communication interface, and the processor is configured to detect a sensing signal sent by a first device, to obtain a measurement value corresponding to a measurement quantity of the sensing signal; where
the measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a ninth aspect, a device is provided. The device is a first device and includes a processor and a communication interface, the communication interface is configured to send a sensing signal to a second device, and the sensing signal is used by the second device to perform detection, to obtain a measurement value corresponding to a measurement quantity of the sensing signal; where
the measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to a tenth aspect, a device is provided. The network device is a first core network device and includes a processor and a communication interface, where the communication interface is configured to send first indication information to a first device or a second device; where
the first indication information is used to indicate a measurement quantity of a sensing signal that needs to be measured by the second device; and
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

According to an eleventh aspect, a readable storage medium is provided. The readable storage medium stores a program or an instruction, and when the program or the instruction is executed by a processor, steps of the method in the first aspect, the third aspect, or the fifth aspect are implemented.

According to a twelfth aspect, a chip is provided. The chip includes a processor and a communication interface, the communication interface is coupled to the processor, and the processor is configured to run a program or an instruction to implement steps of the method in the first aspect, the third aspect, or the fifth aspect.

According to a thirteenth aspect, a computer program/program product is provided. The computer program/program product is stored in a non-transient storage medium, and the computer program/program product is executed by at least one processor to implement steps of the method in the first aspect, the third aspect, or the fifth aspect.

According to a fourteenth aspect, a communication device is provided, configured to perform steps of the method in the first aspect, the third aspect, or the fifth aspect.

In embodiments of this application, a received sensing signal is detected by using a set measurement quantity, and a measurement value corresponding to the measurement quantity of the sensing signal is obtained. In this manner, a proper measurement quantity is used for sensing, thereby improving a network sensing procedure, and ensuring that a network can accurately perform sensing.

### BRIEF DESCRIPTION OF DRAWINGS

FIG. 1 is a schematic diagram of active sensing;
FIG. 2 is a schematic diagram of passive sensing;
FIG. 3 is a schematic diagram of integrated classification of sensing waveforms and communication waveforms;
FIG. 4 is a first schematic flowchart of a detection method according to an embodiment of this application;
FIG. 5 shows a result of performing an FFT operation on a frequency-domain channel response of one subcarrier of one receive antenna;
FIG. 6 is a schematic diagram of variation of an amplitude of a quotient obtained by performing a dot division operation on frequency-domain channel responses of one subcarrier of two receive antennas with time;
FIG. 7 is a schematic diagram of variation of a phase of a quotient obtained by performing a dot division operation on frequency-domain channel responses of one subcarrier of two receive antennas with time;
FIG. 8 shows a result of performing an FFT operation on a quotient obtained by performing a dot division operation on frequency-domain channel responses of one subcarrier of two receive antennas;
FIG. 9 is a schematic diagram of a network unit involved in a specific application case 1;
FIG. 10 is a first schematic diagram of modules of a detection apparatus according to an embodiment of this application;
FIG. 11 is a first structural block diagram of a first device according to an embodiment of this application;
FIG. 12 is a second structural block diagram of a first device according to an embodiment of this application;
FIG. 13 is a second schematic flowchart of a detection method according to an embodiment of this application;
FIG. 14 is a second schematic diagram of modules of a detection apparatus according to an embodiment of this application;
FIG. 15 is a third schematic flowchart of a detection method according to an embodiment of this application;
FIG. 16 is a third schematic diagram of modules of a detection apparatus according to an embodiment of this application; and
FIG. 17 is a structural block diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

Terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects.

It should be noted that, technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described below for example purposes, and the term NR is used in most of the following descriptions, but these technologies can also be applied to an application other than an NR system application, for example, a 6G communication system.

Related technologies involved in this application are described as follows:

Functions and application purposes of wireless sensing are shown in Table 1.

**Table 1 Functions and application purposes of wireless sensing**

| Wireless sensing category | Sensing function | Application purpose |
|---|---|---|
| Large-scale macro sensing | Weather and air quality | Meteorological, agricultural, and living services |
| | Traffic flow (intersections) and human flow (intersections) | Smart city, smart transportation, and business services |
| | Animal activities and migration | Animal husbandry and ecological environment protection |
| | Target tracing, distance measurement, speed measurement, and outline | Many application scenarios of traditional radars |
| | 3D map construction | Smart driving, navigation, smart city |
| Short-range fine sensing | Action and gesture identification | Smart interaction of a smart phone, games, and smart home |
| | Heartbeat/respiration | Health and medical care |
| | Imaging and material detection | Security inspection and industry |

Any sensing function or another sensing requirement in Table 1 may be implemented by sending a sensing signal and receiving/detecting a sensing signal. A device that sends the sensing signal and a device that receives/detects the sensing signal may be a same device, or may be different devices.

An integrated design of communication and sensing is feasible in the following four aspects:

Both a communication system and a sensing system are based on an electromagnetic wave theory, and information is obtained and transferred through transmission and receiving of an electromagnetic wave.

Both the communication system and the sensing system have structures such as an antenna, a transmitter, a receiver, and a signal processor, and overlap with each other in hardware resources.

With the development of technologies, there is increasingly more overlapping between the communication system and the sensing system in terms of working frequency bands.

There is similarity in key technologies such as signal modulation and reception detection and waveform design.

An air interface design of a B5G system or a 6G system supports both a wireless communication signal and a wireless sensing signal. Through a communication-sensing integrated means such as joint signal design and/or hardware sharing, communication and sensing functions are integrated. When information is transferred, a sensing capability is possessed or a sensing service is provided.

Benefits of communication-sensing integration include the following aspects:
costs are reduced;
a size of a device is reduced;
power consumption of the device is reduced;
spectrum efficiency is improved; and
mutual interference between communication and sensing is reduced, and system performance is improved.

Currently, there is no clear definition for a scope of communication-sensing integration. Broad-sense communication-sensing integration includes the following types:
a same network provides a communication service and a sensing service;
a same terminal provides a communication service and a sensing service;
a same spectrum provides a communication service and a sensing service; and
an integrated communication-sensing service is completed in the same radio transmission, that is, joint design of a communication signal and a sensing signal.

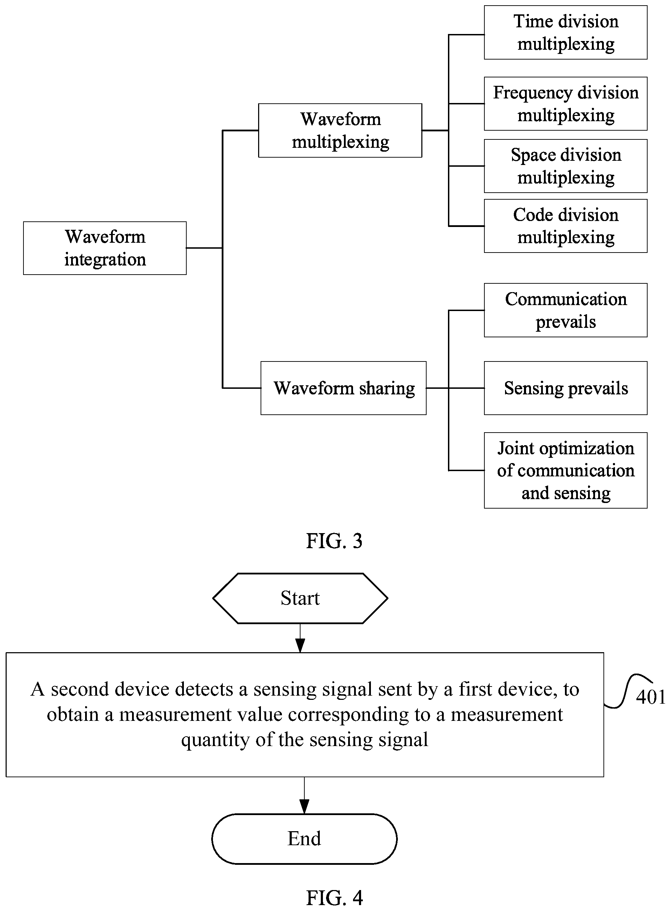

FIG. 3 shows a schematic diagram of integrated classification of sensing waveforms and communication waveforms.

A detection method and apparatus and a device provided in the embodiments of this application are described below in detail with reference to the accompanying drawings by using some embodiments and application scenarios thereof.

As shown in FIG. 4, an embodiment of this application provides a detection method, including:

Step 401: A second device detects a sensing signal sent by a first device, to obtain a measurement value corresponding to a measurement quantity of the sensing signal.

It should be noted that the sensing signal in this embodiment of this application is a sensing signal that needs to be measured by the second device, for example, may be one or more sensing signals. A main function of the sensing signal is to enable the second device to perceive a moving object. For example, the moving object may be a human body, an animal, a moving machine, or a traveling vehicle.

For example, in this embodiment of this application, human body action detection can be implemented, such as respiration monitoring, heartbeat monitoring, action, posture, and gesture recognition, and falling down detection.

It should be noted that the sensing signal may be a reference signal (for example, a channel state information reference signal (Channel State Information Reference Signal, CSI-RS), a demodulation reference signal (Demodulation Reference Signal, DMRS), a sounding reference signal (Sounding Reference Signal, SRS), or a positioning reference signal (Positioning Reference Signal, PRS)), or may be a dedicated sensing signal or another signal.

It should be noted that the second device that receives the sensing signal and the first device that sends the sensing signal in this embodiment of this application may be one of the following device combinations:

A11. A base station A sends the sensing signal, and a base station B receives the sensing signal.

In other words, the first device and the second device are different base stations.

A12. A base station sends the sensing signal, and a terminal receives the sensing signal.

In other words, the first device is a base station, and the second device is a terminal.

A13. A base station sends and receives the sensing signal.

In other words, in this case, the first device and the second device are a same device.

A14. A terminal sends and receives the sensing signal.

In other words, in this case, the first device and the second device are a same device.

A15. A terminal sends the sensing signal, and a base station receives the sensing signal.

In other words, the first device is a terminal, and the second device is a base station.

A16. A terminal A sends he sensing signal, and a terminal B receives the sensing signal.

In other words, the first device and the second device are different terminals.

It should be further noted herein that the first device that sends the sensing signal may be a plurality of devices, and the second device that receives the sensing signal may be a plurality of devices. The base station may be alternatively a transmission and receiving point (Transmission and Receiving Point, TRP), an access point (Access Point, AP), a relay (Relay), a reconfigurable intelligent surface (Reconfigurable Intelligent Surface, RIS), or the like. It should be noted herein that a first core network device mentioned in the following descriptions may be an access and mobility management function (Access and Mobility Management Function, AMF) entity on a core network side. The first core network device may be alternatively a sensing function entity, for example, a sensing network function entity or a sensing network element. The sensing function entity may be located on the core network side or may be located on an access network side. The first core network device may be alternatively another functional entity on the core network side.

Optionally, the measurement quantity in this embodiment of this application includes at least one of the following:

A first measurement quantity.

Specifically, the first measurement quantity includes at least one of the following:

A211. A frequency-domain channel response.

It should be noted that the frequency-domain channel response (it should be noted that the frequency-domain channel response may also be referred to as a channel frequency response (Channel Frequency Response)) may be a frequency-domain channel response corresponding to a sensing signal on a target frequency resource obtained by using a first sampling cycle (for example, a sampling cycle of 20 ms) in preset time (for example, 100 seconds) on one receive antenna of the second device. In this case, there are complex number value of a total of 5,000 different moments (that is, a complex number sequence whose size is 5,000) for the frequency-domain channel response.

For example, the target frequency resource may be at least one subcarrier, a resource element (Resource Element, RE), a physical resource block (Physical Resource Block, PRB), a bandwidth part (Bandwidth Part, BWP), a carrier, or the like.

For example, the frequency-domain channel response may be obtained by the second device by estimating the received sensing signal (for example, a CSI-RS) based on a least square criterion.

It should be noted herein that the channel frequency response is Fourier transform of a channel impulse response, and the channel pulse response is a response generated at a receive end when a pulse signal is sent at a transmit end. For reasons of multi-path delay extension and Doppler frequency shift, different receive ends may have different channel pulse responses. Beyond a same location coherence time, channel pulse response correlation is also relatively small. Receive ends at different locations may have different channel impulse responses due to multi-path.

A212. An amplitude of the frequency-domain channel response.

It should be noted that, the amplitude of the frequency-domain channel response may be an amplitude of a frequency-domain channel response of a target frequency resource of one receive antenna obtained in a first sampling cycle (for example, a sampling cycle of 20 ms) within preset time (for example, 100 seconds).

A213. A phase of the frequency-domain channel response.

It should be noted that the phase of the frequency-domain channel response may be a phase of a frequency-domain channel response of a target frequency resource of one receive antenna obtained in a first sampling cycle (for example, a sampling cycle of 20 ms) within preset time (for example, 100 seconds).

A214. An operation result of first transform corresponding to the frequency-domain channel response.

It should be noted that the operation result of the first transform corresponding to the frequency-domain channel response may be an operation result of first transform corresponding to a frequency-domain channel response of a target frequency resource of one receive antenna obtained in a first sampling cycle (for example, a sampling cycle of 20 ms) within preset time (for example, 100 seconds).

It should be noted that, in this case, the frequency-domain channel response may be a result obtained after an average value is subtracted.

Optionally, the first transform may be fast Fourier transform (Fast Fourier Transform, FFT), wavelet transform, or other transform.

It should be noted that an operation result of the FFT includes at least one of the following:
A2141. A frequency value with a largest amplitude.
A2142. An amplitude value corresponding to a frequency value with a largest amplitude.
A2143. First N frequency values with a relatively large amplitude that are obtained through an FFT operation, where
   N is an integer greater than or equal to 1.
A2144. Amplitudes value corresponding to first M frequency values with a relatively large amplitude that are obtained through an FFT operation, where
   M is an integer greater than or equal to 1.
A2145. At least one group of frequency values and amplitude values.

This case means one or more groups of frequency values and amplitude values that meet a specific rule.

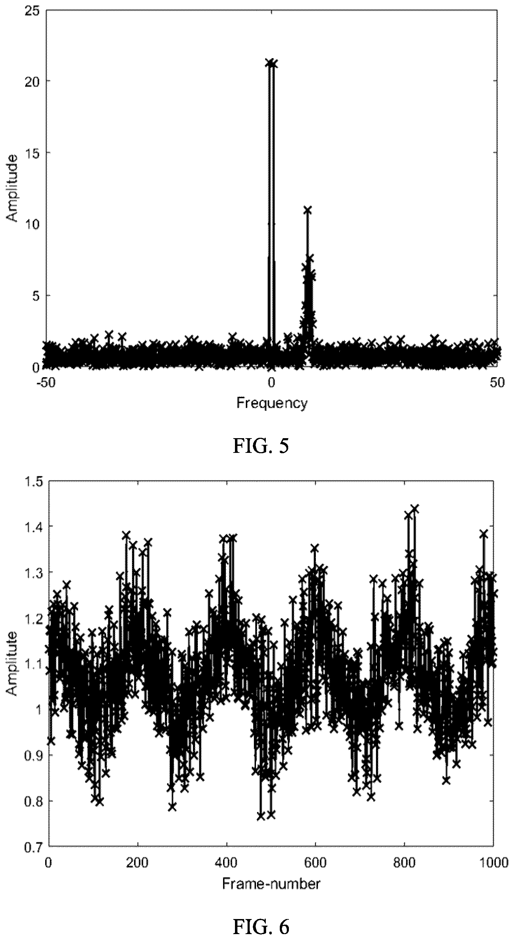

FIG. 5 shows a result of an FFT operation performed on a frequency-domain channel response of one subcarrier of one receive antenna. In FIG. 5, an X-axis is a frequency value, and a Y-axis is an amplitude value.

A215. An operation result of first transform corresponding to an amplitude of the frequency-domain channel response.

It should be noted that the operation result of the first transform corresponding to the amplitude of the frequency-domain channel response may be an operation result of first transform corresponding to an amplitude of a frequency-domain channel response of a target frequency resource of one receive antenna obtained in a first sampling cycle (for example, a sampling cycle of 20 ms) within preset time (for example, 100 seconds).

Optionally, the amplitude of the frequency-domain channel response may be a result obtained after an amplitude average is subtracted.

It should be noted that the first measurement quantity may be alternatively an operation result of wavelet transform corresponding to the amplitude of the frequency-domain channel response or an operation result of other transform.

A216. An operation result of first transform corresponding to a phase of the frequency-domain channel response.

It should be noted that the operation result of the first transform corresponding to the phase of the frequency-domain channel response may be an operation result of first transform corresponding to a phase of a frequency-domain channel response of a target frequency resource of one receive antenna obtained in a first sampling cycle (for example, a sampling cycle of 20 ms) within preset time (for example, 100 seconds).

Optionally, the phase of the frequency-domain channel response may be a result obtained after a phase average is subtracted.

Optionally, the first transform may be FFT, wavelet transform, or other transform.

A22. A second measurement quantity.

Specifically, the second measurement quantity includes at least one of the following:
A221. An operation result of performing a mathematical operation on frequency-domain channel responses of at least two receive antennas. For example, a mathematical operation such as dot conjugate multiplication or dot division is performed on a frequency-domain channel response of ae sensing signal received on a receive antenna 1 and a frequency-domain channel response of a sensing signal received on a receive antenna 2.
A222. An amplitude of an operation result of performing a mathematical operation on frequency-domain channel responses of at least two receive antennas.

For example, FIG. 6 is a schematic diagram of variation of an amplitude of a quotient obtained by performing a dot division operation on frequency-domain channel responses of one subcarrier of two receive antennas with time, where an X-axis is a frame number, and a Y-axis is an amplitude value.

A223. A phase of an operation result of performing a mathematical operation on frequency-domain channel responses of at least two receive antennas,

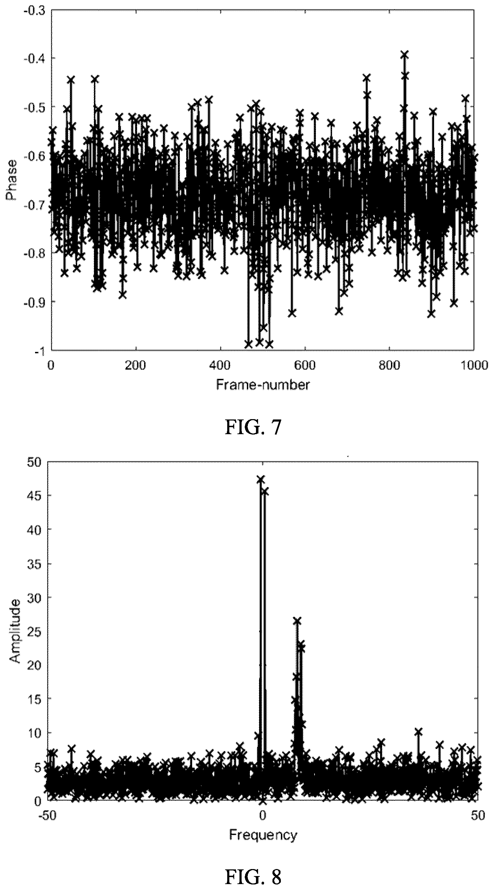

For example, FIG. 7 is a schematic diagram of variation of a phase of a quotient obtained by performing a dot division operation on frequency-domain channel responses of one subcarrier of two receive antennas with time, where an X-axis is a frame number, and a Y-axis is a phase value.

A224. An operation result of first transform corresponding to an operation result of performing a mathematical operation on frequency-domain channel responses of at least two receive antennas.

A225. An operation result of first transform corresponding to an amplitude of an operation result of performing a mathematical operation on frequency-domain channel responses of at least two receive antennas.

A226. An operation result of first transform corresponding to a phase of an operation result of performing a mathematical operation on frequency-domain channel responses of at least two receive antennas.

Optionally, data before a dot conjugate multiplication or dot division operation may be a result obtained after an average value is subtracted, and data obtained after the dot conjugate multiplication or dot division operation may be a result obtained after an average value is subtracted and then FFT is performed.

For example, FIG. 8 shows a result of performing an FFT operation on a quotient of frequency-domain channel responses of one subcarrier of two receive antennas, where an X-axis is a frequency value, and a Y-axis is an amplitude value.

It should be noted herein that the mathematical operation mentioned in A22 may be another mathematical operation manner such as dot conjugate multiplication, dot division, addition, or subtraction.

Optionally, the first transform may be FFT, wavelet transform, or other transform.

It should be noted that the second measurement quantity may be alternatively obtained based on the following steps: performing dot conjugate multiplication or dot division on a frequency-domain channel response of a sensing signal received on a receive antenna 1 and a frequency-domain channel response of a sensing signal received on a receive antenna 2 to obtain a sequence A, and performing dot conjugate multiplication or dot division on a frequency-domain channel response of a sensing signal received on a receive antenna 3 and a frequency-domain channel response of a sensing signal received on a receive antenna 4 to obtain a sequence B; synthesizing the sequence A and the sequence B into a larger sequence C; and then performing FFT, wavelet transform, or other transform on the sequence C to obtain an operation result.

It should be noted that the second measurement quantity may be alternatively obtained based on the following steps: performing dot conjugate multiplication or dot division on ae frequency-domain channel response of a sensing signal received on a receive antenna 1 and a frequency-domain channel response of a sensing signal received on a receive antenna 2 to obtain a sequence X, and performing dot conjugate multiplication or dot division on the frequency-domain channel response of the sensing signal received on the receive antenna 1 and a frequency-domain channel response of a sensing signal received on a receive antenna 3 to obtain a sequence Y; synthesizing the sequence X and the sequence Y into a larger sequence Z; and then performing FFT, wavelet transform, or other transform on the sequence Z to obtain an operation result.

A23. A third measurement quantity.

Optionally, the third measurement quantity includes at least one of the following:
A231. I-channel data of the frequency-domain channel response.
It should be noted that the frequency-domain channel response may be a frequency-domain channel response of a specific frequency resource of at least one receive antenna,
A232. Q-channel data of the frequency-domain channel response.
A233. A result of performing an operation on I-channel data of the frequency-domain channel response and Q-channel data of the frequency-domain channel response.

It should be noted herein that an I-channel signal and a Q-channel signal are respectively an in-phase signal and a quadrature signal, I is an in-phase signal (in-phase), Q is a quadrature signal (quadrature), and a phase difference between the I-channel signal and the Q-channel signal is 90 degrees.

For example, the result of performing an operation on the I-channel data and the Q-channel data may be determined based on I×cos(theta)+Q×sin(theta), where theta is a specific angle value, I represents the I-channel data, and Q represents the Q-channel data.

It should be further noted that the receive antenna mentioned above may also be referred to as a receive antenna port or a receive channel.

It should be further noted that, optionally, the measurement quantity may further include:
related information of a target event; where
the related information of the target event is information that can be detected or sensed when the target event occurs.

The related information of the target event may be at least one of the following: falling down detection, intrusion detection, human quantity counting, human indoor positioning, gesture recognition, lip recognition, gait recognition, expression recognition, respiration monitoring (such as respiration frequency), or heart rate monitoring.

It should be further noted that the measurement quantity may further include a sampling frequency requirement or a minimum sampling frequency for the received sensing signal, for example, the sampling frequency requirement or the minimum sampling frequency is related to respiration frequency.

It should be noted that before detecting the sensing signal, the second device needs to first determine the measurement quantity of the sensing signal. Optionally, before step 401, this embodiment of this application further includes at least one of the following:
B11. The second device receives first indication information sent by the first device or a first core network device, where the first indication information is used to indicate a measurement quantity of a sensing signal that needs to be measured by the second device.

In other words, in this case, the measurement quantity of the sensing signal may be sent to the second device by the first device that sends the sensing signal, or may be sent by an AMF or a sensing function entity to the second device.

B12. Determine, based on a first sensing requirement, the measurement quantity of the sensing signal that needs to be measured by the second device.

In other words, in this case, the measurement quantity of the sensing signal is determined by the second device based on the first sensing requirement. The first sensing requirement is sent by the first device or the first core network device to the second device.

It should be further noted that, to accurately receive the sensing signal, the second device needs to first determine configuration information of the sensing signal before receiving the sensing signal.

Specifically, that the second device determines the configuration information of the sensing signal includes at least one of the following:
B21. The second device receives first configuration information of the sensing signal, where the first configuration information is sent by the first device.
B22. The second device receives second configuration information of the sensing signal, where the second configuration information is sent by the first core network device.
B23. The second device determines third configuration information of the sensing signal based on the first sensing requirement.

It should be noted that the first sensing requirement is sent by the first device or the first core network device to the second device.

It should be noted herein that the configuration information of the sensing signal may be merely notified by the first device to the second device. In this case, the first configuration information includes all configurations of the sensing signal. Alternatively, the configuration information of the sensing signal may only be notified by an AMF entity or the sensing function entity to the second device. In this case, the second configuration information includes all configurations of the sensing signal. The configuration information of the sensing signal may be determined only by the second device. In this case, the third configuration information includes all configurations of the sensing signal. The configuration information of the sensing signal may be determined by at least two of the first device, the second device, and the AMF entity (or the sensing function entity). In other words, each device determines only some parameters or some configuration information in the configuration information of the sensing signal.

For example, the configuration information of the sensing signal includes three configuration parameters A, B, and C. In a case that the configuration information of the sensing signal is merely notified by the first device to the second device, the first configuration information includes the three configuration parameters A, B, and C of the sensing signal. In a case that the configuration information of the sensing signal is merely notified to the second device by the AMF entity or the sensing function entity, the second configuration information includes the three configuration parameters A, B, and C of the sensing signal. In a case that the configuration information of the sensing signal is merely determined by the second device, the third configuration information includes the three configuration parameters A, B, and C of the sensing signal. In a case that the configuration information of the sensing signal is notified by the first device and the AMF to the second device, the first configuration information includes some of the three configuration parameters A, B, and C of the sensing signal (for example, the first configuration information includes A), and the second configuration information includes the other part of the three configuration parameters A, B, and C of the sensing signal (for example, the first configuration information includes B and C). By analogy, other cases are similar to this. Details are not described herein again.

In this case, a base station A (corresponding to the second device), a base station B (corresponding to the first device), and a sensing function entity (corresponding to the first core network device) are used as examples below to describe a process performed before the base station A detects the sensing signal.

Case 1: The base station A receives a first sensing requirement sent by the sensing function entity, and the base station A determines configuration information of the sensing signal based on the first sensing requirement; the base station B determines the configuration information of the sensing signal; and the base station A receives first indication information sent by the sensing function entity, where the first indication information is used to indicate a measurement quantity of the sensing signal that needs to be measured by the base station A; the base station B sends the sensing signal based on the configuration information of the sensing signal; and the base station A receives the sensing signal based on the configuration information of the sensing signal.

It should be noted herein that a manner in which the first device determines the configuration information of the sensing signal includes one of the following:

The first device receives second configuration information of the sensing signal that is sent by the first core network device.

The first device determines first configuration information of the sensing signal based on first information.

The first information includes at least one of the following:
B31. A first sensing requirement.

In this case, the first sensing requirement is sent by the first core network device to the first device.

B32. First recommendation information of the configuration information, where the first recommendation information is determined by the first core network device based on a first sensing requirement.

B33. Second recommendation information of the configuration information, where the second recommendation information is sent by the second device to the first device.

Case 2: The base station A receives a first sensing requirement sent by the base station B, and the base station A determines configuration information of the sensing signal based on the first sensing requirement; the base station B receives configuration information of the sensing signal that is sent by the sensing function entity; the base station A receives first indication information sent by the base station B, where the first indication information is used to indicate a measurement quantity of the sensing signal that needs to be measured by the base station A; the base station B sends the sensing signal based on the configuration information of the sensing signal; and the base station A receives the sensing signal based on the configuration information of the sensing signal.

Specifically, a manner in which the sensing function entity determines the configuration information of the sensing signal includes:
determining second configuration information of the sensing signal based on second information.

The second information includes at least one of the following:
B41. A first sensing requirement.
B42. Sensing capability information sent by the second device.

For example, the sensing capability information may be a capability related to a measurement quantity supported by the second device, for example, measurement quantities supported by the second device. For another example, the sensing capability information may be format information of a sensing signal that can be sent by the second device, for example, maximum bandwidth of the sensing signal that can be sent by the second device is 100 MHz. The sensing capability information may be reported by the second device to the first core network device.

B43. Sensing capability information sent by the first device.

For example, the sensing capability information may be a capability related to a measurement quantity supported by the first device, for example, measurement quantities supported by the first device. For another example, the sensing capability may be format information of a sensing signal that can be detected by the first device, for example, maximum bandwidth of the sensing signal that can be detected by the first device is 100 MHz. The sensing capability may be reported by the first device to the first core network device.

B44. Third recommendation information of the configuration information, where the third recommendation information is determined by the first device based on a first sensing requirement and sent to the first core network device.

B45. Fourth recommendation information of the configuration information, where the fourth recommendation information is determined by the second device based on a first sensing requirement and sent to the first core network device.

B46. Fifth recommendation information of the configuration information, where the fifth recommendation information is sent by the second device to the first core network device.

Further, it should be noted that the first sensing requirement in this embodiment of this application is associated with at least one of the following:
C11. A sensing object.

Optionally, the sensing object includes but is not limited to at least one of an object, a device, a human, an animal, a building, or an automobile.

C12. A sensing amount.

Optionally, the sensing amount includes but is not limited to at least one of a position of a sensing object, a posture or an action of a sensing object, a moving speed of a sensing object, respiration frequency of a sensing object, or heartbeat frequency.

It should be noted that if the first sensing requirement is associated with a combination of the sensing object and the sensing amount, and the following sensing requirement may be generated:
related information of a target event: falling down detection, intrusion detection, human quantity counting, indoor positioning, gesture recognition, lip recognition, gait recognition, expression recognition, respiration monitoring, heart rate monitoring, and the like.

C13. A sensing indicator.

Optionally, the sensing indicator includes but is not limited to at least one of sensing precision, a sensing error, sensing resolution, a sensing range, a sensing delay, a detection probability, and a false alarm probability. Specifically, the sensing resolution includes distance resolution, imaging resolution, moving speed resolution, respiration resolution, heartbeat resolution, or angle resolution. The sensing error includes a distance error, an imaging error, a respiration frequency error, or a moving speed error.

C14. Location information.

It should be noted that the location information may be a specified area, such as a specific room or a specific direction or a specific corner in a specific room, may be a relative location or an absolute location, may be azimuth information and distance information, or may be polar coordinate information, Cartesian coordinate information, or the like in which a sending device, a receiving device, or a known reference point is used as an origin.

Specifically, functions of the location information include at least one of the following:
C141. Calculate of a sensing result (in this case, a node that calculates the sensing result needs to obtain the location information). For example, a sensing signal sending device (the first device) receives a location (a first location) of a sensing target; and then the first device determines a second location based on the location of the sensing target and locations of the first device and the second device. For example, the second location is a Fresnel zone location (for example, a third Fresnel zone).
C142. Selection, based on location information (a first location or a second location), a device(s) for sending and receiving the sensing signal, where the selection needs to be determined with reference to both a sensing-related capability of the first device and a sensing-related capability of the second device.
C143. Determining power or a direction (beam) for sending the sensing signal.
C144. Interference deletion performed by a device (the second device) that receives the sensing signal, for example, cancelation of impact of a signal from another location.

Optionally, in another embodiment of this application, after step 401, the method further includes any one of the following:

D11. The second device sends first data to the first device or the first core network device.

The first data includes at least one of the following: the measurement value of the measurement quantity and a target label corresponding to the measurement value of the measurement quantity.

The target label includes at least one of the following:
D111. A time label.

The time label is a subframe, a frame, a symbol, or a fixed time interval.

It should be noted that the time label is time corresponding to the measurement quantity, for example, time corresponding to the frequency-domain channel response, the amplitude of the frequency-domain channel response, or the phase of the frequency-domain channel response. In other words, the time label identifies a moment at which the sensing signal whose measurement quantity needs to be measured is obtained, and is absolute time or relative time. An advantage of the time label: The time label is conducive to combination of measurement quantities of a plurality of receive ends.

D112. A frequency label.

The frequency label is at least one subcarrier, an RE, a PRB, a BWP, or a carrier.

D113. A location label.

The location label is absolute location information of the second device or the first device, or relative location information of the second device or the first device relative to a target reference point.

It should be noted that the target reference point may be the first device, the second device, or another device.

D114. A cell label.

The cell label is a cell identifier (Identifier, ID) related information associated with the second device or TRP information, or cell ID related information associated with the first device or TRP information.

D115. An antenna label.

The antenna label is a receive antenna of the second device, a receive channel of the second device, a receive antenna port of the second device, a transmit antenna of the first device, a transmit antenna channel of the first device, or a transmit antenna port of the first device.

Optionally, in a case that the first data is sent to the first device, the first device may send the first data to the first core network device, and the first core network device converts a sensing result, and sends the sensing result to the second device (corresponding to a case that the second device initiates a sensing service) or a second core network device (corresponding to a case that the second device initiates a sensing service). Specifically, the second core network device may be another base station, that is, a base station other than a base station that measures the sensing signal, another network element in a core network, such as an application server (corresponding to a case that a third-party application initiates a sensing service), or a network management system.

Optionally, in a case that the first data is sent to the first device, the first device may also obtain a sensing result through conversion based on the first data, and send the sensing result to the first core network device. The first core network device directly sends the sensing result to the second device or the second core network device.

Optionally, in a case that the first data is sent to the first core network device, the first core network device converts a sensing result, and sends the sensing result to the second device or the second core network device.

D 12. The second device determines a sensing result based on the measurement value.

Optionally, after determining the sensing result based on the measurement value, the second device may further send the sensing result to the first device.

In a case that the second device sends the sensing result to the first core network device, the first core network device sends the sensing result to the second core network device.

A perspective of a sensing service initiator is used as an example below to describe actions that need to be performed after the second device (for example, the base station A) obtains the measurement value corresponding to the measurement quantity as follows:

In a case that a third-party application initiates a sensing service, optionally, after obtaining the measurement value, the base station A may send the first data to the base station B (corresponding to the first device); the base station B sends the first data to the sensing function entity; the sensing function entity determines a sensing result based on the first data, and sends the sensing result to an application server; and the application server sends the sensing result to the third-party application. Optionally, after obtaining the measurement value, the base station A may send the first data to the base station B; the base station B determines a sensing result based on the first data and sends the sensing result to the sensing function entity; the sensing function entity sends the sensing result to an application server; and the application server sends the sensing result to the third-party application. Optionally, after obtaining the measurement value, the base station A may determine a sensing result based on the measurement value, and send the sensing result to the base station B; the base station B forwards the sensing result to the sensing function entity; the sensing function entity sends the sensing result to an application server; and the application server sends the sensing result to the third-party application.

In a case that an AMF initiates a sensing service, optionally, after obtaining the measurement value, the base station A may send the first data to the base station B; the base station B sends the first data to the AMF; and the AMF determines a sensing result based on the first data. Optionally, after obtaining the measurement value, the base station A may send the first data to the base station B, and the base station B determines a sensing result based on the first data, and sends the sensing result to the AMF. Optionally, after obtaining the measurement value, the base station A may determine a sensing result based on the measurement value, and send the sensing result to the base station B, and the base station B forwards the sensing result to the AMF.

In a case that the base station A initiates a sensing service, optionally, after obtaining the measurement value, the base station A may send the first data to the base station B; the base station B sends the first data to an AMF; and the AMF determines a sensing result based on the first data, and then sends the sensing result to the base station A. Optionally, after obtaining the measurement value, the base station A may send the first data to the base station B; the base station B determines a sensing result based on the first data, and sends the sensing result to an AMF; and the AMF determines a sensing result based on the measurement value, and then sends the sensing result to the base station A. Optionally, after obtaining the measurement value, the base station A may directly determine a sensing result based on the measurement value.

It should be noted that the sensing result in this embodiment of this application mainly includes related information of a target event.

It should be noted that the configuration information of the sensing signal in this embodiment of this application includes at least one of the following parameters:
E101. A waveform of the sensing signal.

For example, orthogonal frequency division multiplex (Orthogonal Frequency Division Multiplex, OFDM), single-carrier frequency-division multiple access (Single-carrier Frequency-Division Multiple Access, SC-FDMA), orthogonal time frequency space (Orthogonal Time Frequency Space, OTFS), frequency modulated continuous wave (Frequency Modulated Continuous Wave, FMCW), and a pulse signal.

E102. A subcarrier spacing of the sensing signal.

For example, a subcarrier spacing 30 KHz of an OFDM system.

E103. A guard interval of the sensing signal.

It should be noted that the guard interval is a time interval between a moment at which sending of a signal ends and a moment at which a latest echo signal of the signal is received. The parameter is proportional to a maximum sensing distance, and for example, may be calculated by using 2dmax/c, where dmax is the maximum sensing distance (belonging to a sensing requirement). For example, for a self-transmitted and self-received sensing signal, dmax represents a maximum distance from a receiving point of the sensing signal to a signal transmitting point. In some cases, an OFDM signal cyclic prefix (Cyclic Prefix, CP) may function as a minimum guard interval.

E104. Bandwidth of the sensing signal.

It should be noted that the parameter is inversely proportional to distance resolution, and may be obtained by using c/(2×delta_d), where delta_d is the distance resolution (belonging to a sensing requirement), and c is a speed of light.

E105. Burst (burst) duration of the sensing signal.

It should be noted that the burst duration is inversely proportional to rate resolution (belonging to a sensing requirement), and is a time span of the sensing signal, and is mainly used to calculate Doppler frequency shift. The parameter may be calculated by using c/(2× delta_v×fc), where delta_v is speed resolution, and fc is a carrier frequency of the sensing signal.

E106. A time-domain interval of the sensing signal.

It should be noted that the time-domain interval may be calculated by using c/(2×fc*v_range), where v_range is a maximum rate minus a minimum speed (belonging to a sensing requirement). This parameter is a time interval between two adjacent sensing signals.

E107. Transmit signal power of the sensing signal.

For example, a value is taken every 2 dBm from -20 dBm to 23 dBm.

E108. A signal format of the sensing signal.

For example, the signal format may be information such as an SRS, a DMRS, a PRS, or another predefined signal or a related sequence format.

E109. A signal direction of the sensing signal.

For example, the signal direction may be direction information or beam information of the sensing signal.

E110. A time resource of the sensing signal.

For example, the time resource may be a timeslot index or a symbol index of a timeslot in which the sensing signal is located. There are two types of time resources: One is a one-time time resource, for example, one symbol sends an omnidirectional first signal. The other is a non-one-time time resource, such as a plurality of groups of periodic time resources or discontinuous time resources (which may include start time and end time), where each group of periodic time resources sends sensing signals in a same direction, and beam directions of periodic time resources in different groups are different.

E111. A frequency resource of the sensing signal.

Optionally, the frequency resource includes a center frequency, bandwidth, an RB or a subcarrier, a point (Point) A, a start bandwidth location, and the like of the sensing signal.

E112. A quasi co-location (Quasi Co-Location, QCL) relationship of the sensing signal.

For example, the sensing signal includes a plurality of resources, each resource is QCL with one synchronization signal block (Synchronization Signal and Physical Broadcast Channel (PBCH) block, SSB), where QCL includes a type (Type) A, B, C, or D.

Specific application cases of an actual application are described as follows by using examples.

Specific application case 1: The third-party application initiates a sensing service.

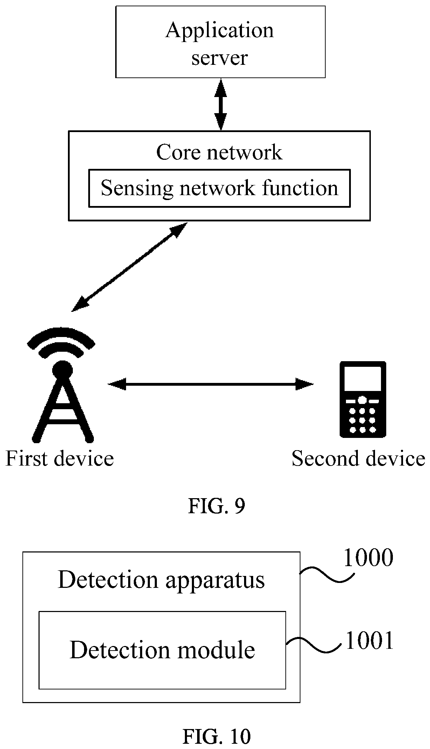

A network device involved in this case is shown in FIG. 9. An implementation process in this case is mainly as follows:

Step S101: An application server receives a sensing requirement of a third-party application.

It should be noted that the sensing requirement is associated with at least one of the following:
a sensing object, a sensing quantity, a sensing indicator, and location information.

Step S102: The application server (including an on-net server such as an Internet Protocol (Internet Protocol, IP) multimedia subsystem (IP Multimedia Subsystem, IMS) or an off-net server) sends the sensing requirement to a core network (such as an AMF) or a sensing network function entity/sensing network element (if any) of a core network.

Alternatively, the application server sends the sensing requirement to the AMF, and the AMF forwards the sensing requirement to a sensing network function entity/sensing network element.

It should be noted herein that the sensing network function (sensing network function) entity/sensing network function of the core network exchanges target information with user equipment (User Equipment, UE), a serving base station of target UE, or a base station associated with a target area (the target information includes a processing sensing request, an interaction sensing capability, auxiliary data for interactive sensing, and a measurement quantity or a sensing result for interactive sensing) to obtain a target sensing result or a sensing measurement quantity (an uplink measurement quantity or a downlink measurement quantity). Alternatively, base station information that may need to be exchanged may be obtained by interacting with another network element/function in the core network based on a target area.

It should be noted herein that the core network (or the sensing network element), the application server, or another node (such as an AMF) completes a monitoring process. If the AMF forwards the requirement to the sensing network element, and a plurality of sensing network elements may correspond to one AMF, a problem of selecting the sensing network element exists (the AMF performs selection):

Considerations of the AMF to select the sensing network element include at least one of the following: requested quality of service (Quality of Service, QoS) (such as sensing precision, response time, and a sensing QoS level), an access type (3rd Generation Partnership Project (3rd Generation Partnership Project, 3GPP) access/non-3GPP access), an access network (Access Network, AN) type (that is, 5G NR or evolved LTE (evolved LTE, eLTE)) of the target UE, a serving AN node (that is, next Generation Node B, gNodeB, or gNB), or a next-generation evolved NodeB (Next Generation evolved Node B, NG-eNodeB), radio access network (Radio Access Network, RAN) configuration information, a sensing network element capability, sensing network element load, a sensing network element location, an indication of single event reporting or a plurality of times of event reporting, event reporting duration, and network slice information.

Step S103: The core network (or the sensing network element) sends the sensing requirement or configuration information of a sensing signal to a first device.

It should be further noted that the configuration information of the sensing signal may be further associated with the sensing requirement, and only the sensing requirement needs to be notified. A receive end determines the configuration information of the sensing signal based on the sensing requirement and an association relationship.

Optionally, an entity that completes the step of determining the configuration information of the sensing signal based on the sensing requirement (for example, determining bandwidth of the sensing signal based on a sensing resolution requirement) includes several manners.

Y11. The first device reports a sensing capability (a capability related to sending of the sensing signal, for example, maximum bandwidth for sending the sensing signal, or maximum transmit power of the sensing signal) of the first device to the core network, and/or a second device reports a sensing capability (a capability related to receiving of the sensing signal, for example, maximum bandwidth of the sensing signal that can be received, or a supported measurement quantity of the sensing signal) of the second device to the core network (the AMF or the sensing network element). Then, the core network determines the configuration information of the sensing signal based on the sensing requirement.

Y12. The first device determines the configuration information of the sensing signal based on a sensing requirement.

Y13. The core network recommends the configuration information of the sensing signal to the first device based on a sensing requirement, and the first device finally determines the configuration information of the sensing signal.

Y14. The first device recommends the configuration information of the sensing signal to the core network based on a sensing requirement, and the core network finally determines the configuration information of the sensing signal.

Y15. The second device sends recommended configuration information of the sensing signal to the first device, and the first device makes the decision.

Y16. The second device sends recommended configuration information of the sensing signal to the core network, and the core network makes the decision.

Y17. Each of at least two of the core network, the first device, and the second device determines a part of the configuration information of the sensing signal.

It should be noted herein that, a method for determining the first device is: the core network or the sensing network element determines, based on the target area, that an associated device is the first device, and determines a direction in which the first device sends the sensing signal.

Step S104: The core network (or the sensing network element) or the first device sends the configuration information (including time-frequency information, sequence information, and the like) of the sensing signal or the sensing requirement to the second device.

It should be noted that the first device determines a second device that participates in sensing (that is, receives the sensing signal), or the AMF/sensing network function entity/sensing network element determines a second device that participates in sensing.

Specifically, a method for determining the second device that participates in sensing includes at least one of the following:
based on whether the second device accesses the associated first device (that is, the first device that sends the sensing signal);
based on related information in capability reporting of the second device, for example, a capability related to a supported measurement quantity (in this case, the second device needs to report a capability first); and
based on other prior information, such as location information of the second device (for example, in a respiration monitoring service, only a second device in a respiration monitoring area needs to be involved).

It should be further noted herein that after the second device that participates in sensing is determined, the first device may further choose a proper second device, for example, a second device with relatively high RSRP, based on related information of a sensing measurement signal that is reported by the second device, for example, measurement quantities such as received signal strength indication (Received Signal Strength Indication, RSSI), RSRP, and mobility.

Step S105: The core network (or the sensing network element) or the first device sends, to the second device, a measurement quantity related to a sensing signal that needs to be measured by the second device; or
the measurement quantity is determined by the second device based on the sensing requirement, and separate signaling indication (a mapping table from the sensing requirement to the measurement quantity) is not required.

Step S106: The first device sends the sensing signal.

It should be noted that the first device sends the sensing signal in a beam sweeping (beam sweeping) manner.

Step S107: The second device receives the sensing signal.

After receiving the sensing signal, the second device obtains a measurement value of the corresponding measurement quantity. For the measurement value, one of the following processing manners may be selected:

Processing manner 1: Conversion from the measurement value to a sensing result is completed on the core network or the application server.

Step S108: The second device sends the measurement value of the measurement quantity and a corresponding time label to the first device, and the first device sends the measurement value of the measurement quantity and the corresponding time label to the core network (or the sensing network element).

Step S109: The core network (or the sensing network element) sends the measurement value of the measurement quantity and the corresponding time label to the application server, and the application server determines a sensing result based on the measurement value of the measurement quantity and the corresponding time label; or
the core network (or the sensing network element) determines a sensing result based on the measurement value of the measurement quantity and the corresponding time label, and sends the sensing result to the application server.

Step S110: The application server sends the sensing result to a third-party application.

Processing manner 2: Conversion from the measurement value to a sensing result is completed on the first device.

Step S108: The second device sends the measurement value of the measurement quantity and a corresponding time label to the first device.

Step S109: The first device determines a sensing result based on the measurement value of the measurement quantity and the corresponding time label, and sends the sensing result to the core network (or the sensing network element).

Step S110: The core network (or the sensing network element) sends the sensing result to the application server.

Step S111: The application server sends the sensing result to a third-party application.

Processing manner 3: Conversion from the measurement value to a sensing result is completed on the second device.

Step S108: The second device determines a sensing result based on the measurement value of the measurement quantity.

Step S109: The second device sends the sensing result to the first device, and the first device sends the sensing result to the core network (or the sensing network element).

Step S110: The core network (or the sensing network element) sends the sensing result to the application server.

Step S111: The application server sends the sensing result to a third-party application.

It should be further noted that related information of the first device, such as an antenna location, synchronization information (system frame number (System frame number, SFN) start time), artificial intelligence (Artificial Intelligence, AI) related information (such as AI training data), and the like, also needs to be sent to a node that completes the foregoing conversion, to assist in completing a conversion process.

It should be further noted that a charging function is completed in the core network or on the application server.

It should be further noted that the sensing signal in the foregoing procedure may be sent by a plurality of first devices/TRPs, and the sensing signal may also be received by a plurality of second devices. In this case, the core network needs to determine a first device set that sends the sensing signal and a first device set that receives the sensing signal, separately send configuration information of the sensing signal of the plurality of first devices to the plurality of corresponding first devices and the plurality of second devices, and separately send, to the plurality of second devices, measurement quantities related to the sensing signal that need to be measured by a receiving first device. Optionally, a plurality of sending first devices need to exchange configuration information of the sensing signal (for example, a first device that serves as a coordinator sends the configuration information of the sensing signal to another sending first device, and sends a measurement quantity related to the sensing signal to the second device). The first device in the foregoing procedure may be a TRPA.

Specific application case 2: The core network (or a network management system or the first device) initiates a sensing service.

An implementation process in this case is mainly as follows:

Step S201: An AMF in a core network sends a sensing requirement or configuration information of a sensing signal to a sensing network function entity/sensing network element.

Alternatively, the AMF receives a sensing requirement or configuration information of a sensing signal that is sent by the network management system, and forwards the sensing requirement or the configuration information of the sensing signal to the sensing network function entity/sensing network element.

Alternatively, the AMF receives a sensing requirement or configuration information of a sensing signal that is sent by a first device, and forwards the sensing requirement or the configuration information of the sensing signal to the sensing network function entity/the sensing network element (note: The sensing requirement or the configuration information of the sensing signal of the first device may not be sent to the core network, and may be directly sent to the first device).

Step S202: The sensing network function entity/sensing network element sends the sensing requirement or the configuration information of the sensing signal to the first device (or the AMF sends the sensing requirement or the configuration information of the sensing signal to the first device).

Alternatively, the configuration information of the sensing signal is associated with the sensing requirement, and only the sensing requirement needs to be notified. A receive end determines the configuration information of the sensing signal based on the sensing requirement and an association relationship.

Step S203: The core network (or the sensing network function entity/sensing network element) or the first device sends the configuration information (including time-frequency information, sequence information, and the like) of the sensing signal or the sensing requirement to the second device (a receiving first device).

Step S204: The core network (or the sensing network function entity/sensing network element) or the first device sends a measurement quantity related to the sensing signal to the second device; or
the measurement quantity is determined by the second device based on the sensing requirement, and separate signaling indication (a mapping table from the sensing requirement to the measurement quantity) is not required.

Step S205: The first device sends the sensing signal.

It should be noted that the first device sends the sensing signal in a beam sweeping manner.

Step S206: The second device receives the sensing signal.

After receiving the sensing signal, the second device obtains a measurement value of the corresponding measurement quantity. For the measurement value, one of the following processing manners may be selected:

Processing manner 1: Conversion from the measurement value to a sensing result is completed in the core network.

Step S207: The second device sends the measurement value of the measurement quantity to the first device.

Step S208: The first device sends the measurement value of the measurement quantity to the core network (the AMF or the sensing network function entity/sensing network element).

Step S209: The core network (the AMF or the sensing network function entity/sensing network element) converts the measurement value of the measurement quantity into a sensing result.

Processing manner 2: Conversion from the measurement value to a sensing result is completed on the first device.

Step S207: The second device sends the measurement value of the measurement quantity to the first device.

Step S208: The first device determines a sensing result based on the measurement value of the measurement quantity.

Step S209: The first device sends the sensing result to the core network (the AMF or the sensing network function entity/sensing network element).

Processing manner 3: Conversion from the measurement value to a sensing result is completed on the second device.

Step S207: The second device determines a sensing result based on the measurement value of the measurement quantity.

Step S208: The second device sends the sensing result to the first device.

Step S209: The first device sends the sensing result to the core network (or the sensing network function entity/sensing network element).

It should be noted herein that related information of the first device, such as an antenna location, synchronization information (SFN start time), and AI related information, also needs to be sent to a node that completes the foregoing conversion, to assist in completing a conversion process.

It should also be noted that a charging function is completed in the core network.

If the sensing network function entity/sensing network element is deployed on the first device, an optional solution is as follows: The entire sensing service may not pass through the core network.

It should be further noted that the sensing signal in the foregoing procedure may be sent by a plurality of first devices/TRPs, and the sensing signal may also be received by a plurality of second devices. In this case, the core network needs to determine a first device set that sends the sensing signal and a first device set that receives the sensing signal, separately send configuration information of the sensing signal of the plurality of first devices to the plurality of corresponding first devices and the plurality of second devices, and separately send, to the plurality of second devices, measurement quantities related to the sensing signal that need to be measured by a receiving first device. Optionally, a plurality of sending first devices need to exchange configuration information of the sensing signal (for example, a first device that serves as a coordinator sends the configuration information of the sensing signal to another sending first device, and sends a measurement quantity related to the sensing signal to the second device). The first device in the foregoing procedure may be a TRPA.

Specific application case 3: The second device initiates a sensing service.

An implementation process in this case is mainly as follows:
Step S301: A second device sends a sensing requirement or configuration information of a sensing signal to an AMF by using non-access stratum (Non-Access Stratum, NAS) signaling.
Step S302: The AMF sends the sensing requirement or the configuration information of the sensing signal to a sensing network function entity/sensing network element.
Step S303: The sensing network function entity/sensing network element sends the sensing requirement or the configuration information of the sensing signal to the first device (or the AMF sends the sensing requirement or the configuration information of the sensing signal to the first device).

Alternatively, the configuration information of the sensing signal is associated with the sensing requirement, and only the sensing requirement needs to be notified. A receive end determines the configuration information of the sensing signal based on the sensing requirement and an association relationship.

Optionally, an entity that completes the step of determining the configuration information of the sensing signal based on the sensing requirement (for example, determining bandwidth of the sensing signal based on a sensing resolution requirement):
Y21. The first device reports a sensing capability (a capability related to sending of the sensing signal, for example, maximum bandwidth for sending the sensing signal, or maximum transmit power of the sensing signal) of the first device to the core network (the AMF or the sensing network function entity/sensing network element), and then the core network determines the configuration information of the sensing signal based on the sensing requirement.
Y22. The first device determines the configuration information of the sensing signal based on the sensing requirement.
Y23. The core network determines a part of the configuration information of the sensing signal, and the first device determines the other part of the configuration information of the sensing signal.
Y24. The core network recommends the configuration information of the sensing signal to the first device based on the sensing requirement, and the first device finally determines the configuration information of the sensing signal.
Y25. The first device recommends the configuration information of the sensing signal to the core network based on the sensing requirement, and the core network finally determines the configuration information of the sensing signal.
Y26. The second device recommends the configuration information of the sensing signal to the first device based on the sensing requirement, and the first device finally determines the configuration information of the sensing signal.
Y27. The second device recommends the configuration information of the sensing signal to the core network based on the sensing requirement, and the core network finally determines the configuration information of the sensing signal.
Y28. The second device determines the configuration information of the sensing signal based on the sensing requirement.

Step S304: The core network (or the sensing network function entity/sensing network element) or the first device sends the configuration information (including time-frequency information, sequence information, and the like) of the sensing signal or the sensing requirement to the second device.

Step S305: The core network (or the sensing network function entity/sensing network element) or the first device sends a measurement quantity related to the sensing signal to the second device; or
the measurement quantity is determined by the second device based on the sensing requirement, and separate signaling indication (a mapping table from the sensing requirement to the measurement quantity) is not required.

Step S306: The first device sends the sensing signal.

It should be noted that the first device sends the sensing signal in a beam sweeping manner.

Step S307: The second device receives the sensing signal.

After receiving the sensing signal, the second device obtains a measurement value of the corresponding measurement quantity. For the measurement value, one of the following processing manners may be selected:

Processing manner 1: Conversion from the measurement value to a sensing result is completed in the core network.

Step S308: The second device sends the measurement value of the measurement quantity to the first device.

Step S309: The first device sends the measurement value of the measurement quantity to the core network (the AMF or the sensing network function entity/sensing network element).

Step S310: The core network (the AMF or the sensing network function entity/sensing network element) determines a sensing result based on the measurement value of the measurement quantity.

Step S311: The core network (the AMF or the sensing network function/sensing network element) sends the sensing result to the second device (by using NAS signaling).

Processing manner 2: Conversion from the measurement value to a sensing result is completed on the first device.

Step S308: The second device sends the measurement value of the measurement quantity to the first device.

Step S309: The first device determines a sensing result based on the measurement value of the measurement quantity, and sends the measurement result to the core network (the AMF or the sensing network function entity/sensing network element).

Step S310: The core network (the AMF or the sensing network function entity/sensing network element) sends the sensing result to the second device (by using NAS signaling).

Processing manner 3: Conversion from the measurement value to a sensing result is completed on the second device.

Step S308: The second device determines a sensing result based on the measurement value of the measurement quantity.

It should be further noted that related information of the first device, such as an antenna location, synchronization information (SFN start time), and AI related information, also needs to be sent to a node that completes the foregoing conversion, to assist in completing a conversion process.

It should be further noted that a charging function is completed in the core network or on the application server.

It should be noted that the sensing signal in the foregoing procedure may be sent by a plurality of first devices/TRPs, and the sensing signal may also be received by a plurality of second devices. In this case, the core network needs to determine a first device set that sends the sensing signal and a first device set that receives the sensing signal, separately send configuration information of the sensing signal of the plurality of first devices to the plurality of corresponding first devices and the plurality of second devices, and separately send, to the plurality of second devices, measurement quantities related to the sensing signal that need to be measured by a receiving first device. Optionally, a plurality of sending first devices need to exchange configuration information of the sensing signal (for example, a first device that serves as a coordinator sends the configuration information of the sensing signal to another sending first device, and sends a measurement quantity related to the sensing signal to the second device). The first device in the foregoing procedure may be a TRPA.

It should be further noted herein that the sensing signal in the foregoing procedure may be sent by a plurality of first devices, and a receiving sensing signal may also be a plurality of second devices.

In this application, related detection is mainly performed on a moving object, and a wireless sensing-related procedure of sending the sensing signal by the first device is provided. For example, in this application, wireless sensing of human motion detection, such as respiration monitoring and motion recognition, can be implemented. In this application, a definition of the measurement quantity, a service process, and signaling interaction between different sensing nodes are described in detail, thereby improving a network communication process and ensuring smooth implementation of sensing.

It should be noted that the detection method provided in this embodiment of this application may be performed by a detection apparatus or a control module that is in the detection apparatus and that is configured to perform the detection method. In the embodiments of this application, a detection apparatus provided in the embodiments of this application is described by using an example in which the detection apparatus performs the detection method.

As shown in FIG. 10, an embodiment of this application provides a detection apparatus 1000, applied to a first device and including:
a detection module 1001, configured to: detect a sensing signal sent by the first device, and obtain a measurement value corresponding to a measurement quantity of the sensing signal.

The measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

Optionally, before the detection module 1001 detects the sensing signal sent by the first device, the apparatus further includes at least one of the following:
a first receiving module, configured to receive first indication information sent by the first device or a first core network device, where the first indication information is used to indicate a measurement quantity of the sensing signal that needs to be measured by the second device; and
a first determining module, configured to determine, based on a first sensing requirement, a measurement quantity of the sensing signal that needs to be measured by the second device.

Optionally, the measurement quantity further includes:
related information of a target event; where
the related information of the target event is information that can be detected or sensed when the target event occurs.

Optionally, the first transform includes fast Fourier transform FFT and/or wavelet transform; where
an operation result of the FFT includes at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; where
N and M are integers greater than or equal to 1.

Optionally, before the detection module 1001 detects the sensing signal sent by the first device, the apparatus further includes:
a second determining module, configured to determine configuration information of the sensing signal.

Optionally, the second determining module is configured to implement at least one of the following:
receiving first configuration information of the sensing signal, where the first configuration information is sent by the first device;
receiving second configuration information of the sensing signal, where the second configuration information is sent by a first core network device; and
determining third configuration information of the sensing signal based on the first sensing requirement.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time-domain interval of the sensing signal;
transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the first sensing requirement is sent by the first device or the first core network device to the second device; and/or
the first sensing requirement is associated with at least one of the following:
a sensing object;
a sensing quantity;
a sensing indicator; and
location information.

Optionally, after the detection module 1001 detects the sensing signal sent by the first device and obtains the measurement value corresponding to the measurement quantity of the sensing signal, the apparatus further includes either of the following:
a third sending module, configured to send first data to the first device or the first core network device; and
a third determining module, configured to determine a sensing result based on the measurement value; where
the first data includes at least one of the following: the measurement value of the measurement quantity and a target label corresponding to the measurement value of the measurement quantity; where
the target label includes at least one of the following:
   a time label, where the time label is a subframe, a frame, a symbol, or a fixed time interval;
   a frequency label, where the frequency label is at least one subcarrier, a resource element RE, a physical resource block PRB, a bandwidth part BWP, or a carrier;
   a location label, where the location label is absolute location information of the second device or the first device or relative location information of the second device or the first device relative to a target reference point;
   a cell label, where the cell label is cell ID-related information or transmission and receiving point TRP information associated with the second device or cell ID-related or TRP information associated with the first device; and
   an antenna label, where the antenna label is a receive antenna of the second device, a receive channel of the second device, a receive antenna port of the second device, a transmit antenna of the first device, a transmit antenna channel of the first device, or a transmit antenna port of the first device.

Optionally, after the third determining module determines the sensing result based on the measurement value, the apparatus further includes:
a fourth sending module, configured to send the sensing result to the first device.

It should be noted that the apparatus embodiment is an apparatus corresponding to the foregoing method. All implementations in the foregoing method embodiment are applicable to the apparatus embodiment, and a same technical effect can be achieved. Details are not described herein again.

The detection apparatus provided in this embodiment of this application can implement the processes of the method embodiment of FIG. 4, and a same technical effect can be achieved. To avoid repetition, details are not described herein again.

Preferably, an embodiment of this application further provides a device. The device is a second device, and includes a processor, a memory, and a program or an instruction that is stored in the memory and that can be run on the processor. When the program or the instruction is executed by the processor, the processes of the embodiment of the detection method applied to a second device side are implemented, and a same technical effect can be achieved. To avoid repetition, details are not described herein again.

An embodiment of this application further provides a readable storage medium. The computer-readable storage medium stores a program or an instruction, and when the program or the instruction is executed by a processor, the processes of the embodiment of the detection method applied to a second device side are implemented, and a same technical effect can be achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a device. The device is a second device, and includes a processor and a communication interface. The processor is configured to detect a sensing signal sent by a first device, and obtain a measurement value corresponding to a measurement quantity of the sensing signal.

The measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

This device embodiment is corresponding to the foregoing embodiment of the detection method. Each implementation process and implementation of the foregoing method embodiment may be applicable to this device embodiment, and a same technical effect can be achieved.

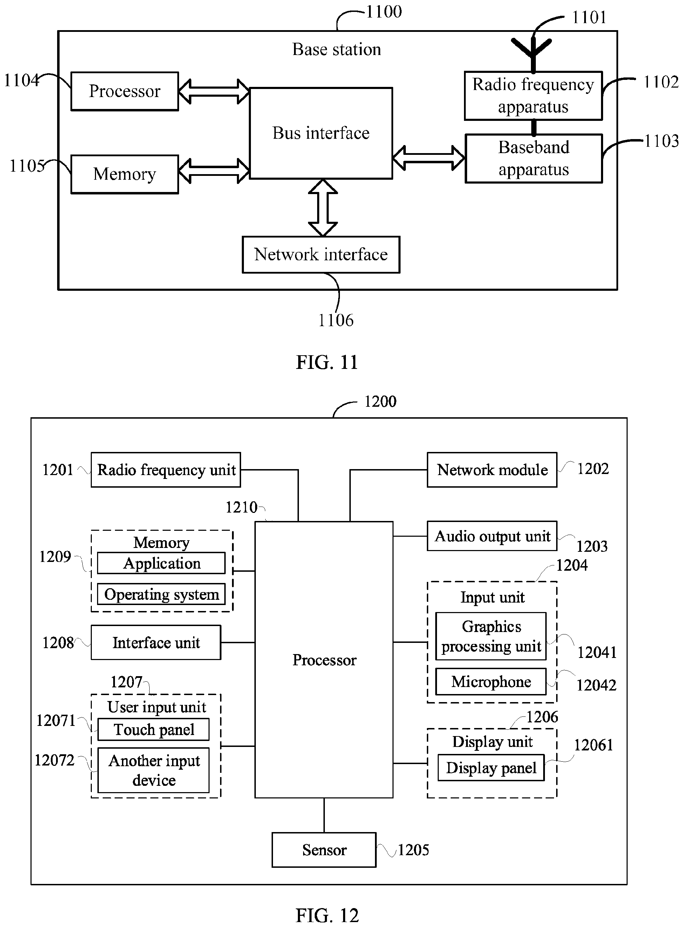

Specifically, an embodiment of this application further provides a device, and the device is a first device. When the first device is a base station, as shown in FIG. 11, a base station 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes information that needs to be sent, and sends processed information to the radio frequency apparatus 1102. The radio frequency apparatus 1102 processes the received information, and sends processed information by using the antenna 1101.

The band processing apparatus may be located in the baseband apparatus 1103, and the method performed by the base station in the foregoing embodiment may be implemented in the baseband apparatus 1103. The baseband apparatus 1103 includes a processor 1104 and a memory 1105.

The baseband apparatus 1103 may include, for example, at least one baseband board, and a plurality of chips are disposed on the baseband board. As shown in FIG. 11, one chip is, for example, the processor 1104, and is connected to the memory 1105, to invoke a program in the memory 1105 to perform operations of a network device shown in the foregoing method embodiment.

The baseband apparatus 1103 may further include a network interface 1106, configured to exchange information with the radio frequency apparatus 1102, and the interface is, for example, a common public radio interface (common public radio interface, CPRI).

Specifically, the base station in this embodiment of this application further includes a program or an instruction that is stored in the memory 1105 and that can be run on the processor 1104, and the processor 1104 invokes the program or the instruction in the memory 1105 to perform the method performed by the modules shown in FIG. 10, and a same technical effect is achieved. To avoid repetition, details are not described herein again.

When the first device is a terminal, FIG. 12 is a schematic diagram of a hardware structure of a terminal.

A terminal 1200 includes but is not limited to some components in a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the terminal 1200 may further include a power supply (such as a battery) that supplies power to each component. The power supply may be logically connected to the processor 1210 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (for example, a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1210 for processing; and sends uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 1209 may mainly include a program or instruction storage area and a data storage area. The program or instruction storage area may store an operating system, an application or an instruction required by at least one function (for example, a sound playing function or an image playing function), and the like. In addition, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1210 may include one or more processing units. Optionally, an application processor and a modem processor may be integrated into the processor 1210. The application processor mainly processes an operating system, a user interface, an application, an instruction, or the like. The modem processor mainly processes wireless communication, for example, a baseband processor. It may be understood that, alternatively, the modem processor may not be integrated into the processor 1210.

The processor 1210 is configured to:
detect a sensing signal sent by a first device, and obtain a measurement value corresponding to a measurement quantity of the sensing signal; where
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

Optionally, before the processor 1210 detects the sensing signal sent by the first device, the radio frequency unit 1201 is configured to:
receive, first indication information sent by the first device or a first core network device, where the first indication information is used to indicate a measurement quantity of a sensing signal that needs to be measured by the second device; or
the processor 1210 is further configured to:
   determine, based on a first sensing requirement, a measurement quantity of the sensing signal that needs to be measured by the second device.

Optionally, the measurement quantity further includes:
related information of a target event; where
the related information of the target event is information that can be detected or sensed when the target event occurs.

Optionally, the first transform includes fast Fourier transform FFT and/or wavelet transform; where
an operation result of the FFT includes at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; where
N and M are integers greater than or equal to 1.

Optionally, the processor 1210 is further configured to:
determine configuration information of the sensing signal.

Optionally, the radio frequency unit 1201 is further configured to implement at least one of the following:
receiving first configuration information of the sensing signal, where the first configuration information is sent by the first device;
receiving second configuration information of the sensing signal, where the second configuration information is sent by a first core network device; and
determining, by the second device, third configuration information of the sensing signal based on a first sensing requirement.

Optionally, the configuration information of the sensing signal includes at least one of the following parameters:
a waveform of the sensing signal;
a subcarrier spacing of the sensing signal;
a guard interval of the sensing signal;
a bandwidth of the sensing signal;
burst duration of the sensing signal;
a time-domain interval of the sensing signal;
transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the first sensing requirement is sent by the first device or the first core network device to the second device; and/or
the first sensing requirement is associated with at least one of the following:
a sensing object;
a sensing quantity;
a sensing indicator; and
location information.

Optionally, after the processor 1210 detects the sensing signal sent by the first device and obtains the measurement value corresponding to the measurement quantity of the sensing signal, the radio frequency unit 1201 is further configured to:
send first data to the first device or the first core network device; or
the processor 1210 is further configured to:
   determine a sensing result based on the measurement value; where
   the first data includes at least one of the following: the measurement value of the measurement quantity and a target label corresponding to the measurement value of the measurement quantity; where
   the target label includes at least one of the following:
      a time label, where the time label is a subframe, a frame, a symbol, or a fixed time interval;
      a frequency label, where the frequency label is at least one subcarrier, a resource element RE, a physical resource block PRB, a bandwidth part BWP, or a carrier;
      a location label, where the location label is absolute location information of the second device or the first device or relative location information of the second device or the first device relative to a target reference point;
      a cell label, where the cell label is cell ID-related information or transmission and receiving point TRP information associated with the second device or cell ID-related or TRP information associated with the first device; and
      an antenna label, where the antenna label is a receive antenna of the second device, a receive channel of the second device, a receive antenna port of the second device, a transmit antenna of the first device, a transmit antenna channel of the first device, or a transmit antenna port of the first device.

Optionally, after the processor 1210 determines the sensing result based on the measurement value, the following is further included:

The radio frequency unit 1201 is further configured to send the sensing result to the first device.

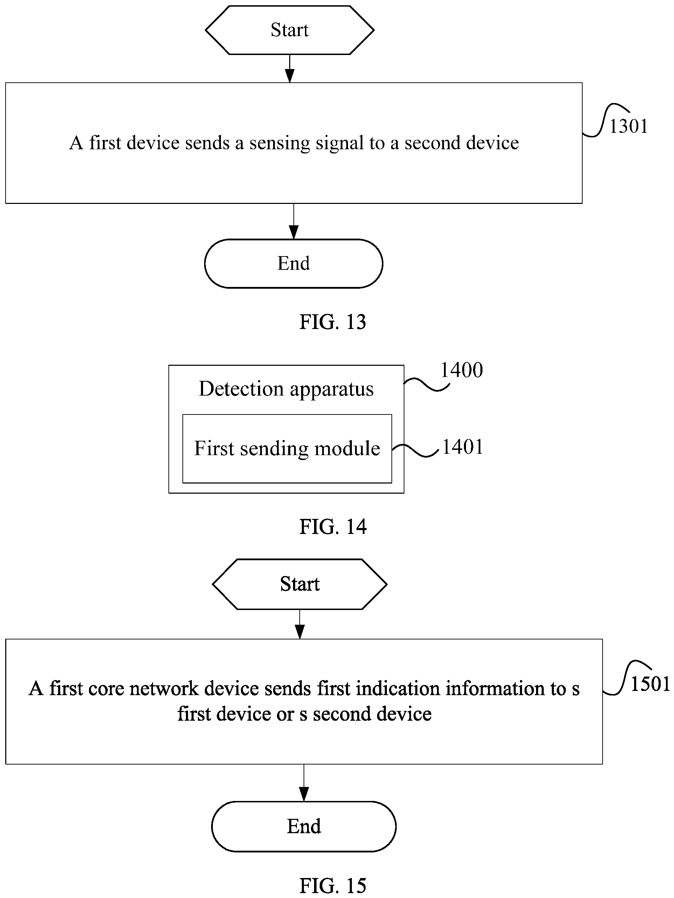

As shown in FIG. 13, an embodiment of this application provides a detection method, including:

Step 1301: A first device sends a sensing signal to a second device, where the sensing signal is used by the second device to perform detection, to obtain a measurement value corresponding to a measurement quantity of the sensing signal.

The measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

Optionally, before the first device sends the sensing signal to the second device, the method further includes:
sending, by the first device, first indication information to the second device, where the first indication information is used to indicate a measurement quantity of a sensing signal that needs to be measured by the second device.

Optionally, the measurement quantity further includes:
related information of a target event; where
the related information of the target event is information that can be detected or sensed when the target event occurs.

Optionally, the first transform includes fast Fourier transform FFT and/or wavelet transform; where
an operation result of the FFT includes at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; where
N and M are integers greater than or equal to 1.

Optionally, before the first device sends the sensing signal to the second device, the method further includes:
determining, by the first device, configuration information of the sensing signal.

Optionally, the determining, by the first device, configuration information of the sensing signal includes one of the following:
receiving, by the first device, second configuration information of the sensing signal that is sent by a first core network device; and
determining, by the first device, first configuration information of the sensing signal based on first information; where
the first information includes at least one of the following:
   a first sensing requirement;
   first recommendation information of the configuration information, where the first recommendation information is determined by the first core network device based on the first sensing requirement; and
   second recommendation information of the configuration information, where the second recommendation information is sent by the second device to the first device.

Optionally, after the determining, by the first device, configuration information of the sensing signal, the method further includes:
sending, by the first device, second indication information to the second device; where
the second indication information includes at least one of the first configuration information of the sensing signal and the first sensing requirement.

Optionally, the first sensing requirement is sent by the first core network device to the first device.

Optionally, after the sending, by the first device, the sensing signal to the second device, the method further includes one of the following:
receiving, by the first device, first data sent by the second device, and forwarding the first data to a first core network device;
receiving, by the first device, first data sent by the second device, determining a sensing result based on the first data, and sending the sensing result to the first core network device; and
receiving, by the first device, a sensing result sent by the second device, and forwarding the sensing result to the first core network device; where
the first data includes at least one of the following: the measurement value of the measurement quantity and a target label corresponding to the measurement value of the measurement quantity; where
the target label includes at least one of the following:
   a time label, where the time label is a subframe, a frame, a symbol, or a fixed time interval;
   a frequency label, where the frequency label is at least one subcarrier, a resource element RE, a physical resource block PRB, a bandwidth part BWP, or a carrier;
   a location label, where the location label is absolute location information of the second device or the first device or relative location information of the second device or the first device relative to a target reference point;
   a cell label, where the cell label is cell ID-related information or transmission and receiving point TRP information associated with the second device or cell ID-related or TRP information associated with the first device; and
   an antenna label, where the antenna label is a receive antenna of the second device, a receive channel of the second device, a receive antenna port of the second device, a transmit antenna of the first device, a transmit antenna channel of the first device, or a transmit antenna port of the first device.

It should be noted that all descriptions of the first device in the foregoing embodiments are applicable to the embodiment of the detection method, and a same technical effects can be achieved. Details are not provided herein again.

As shown in FIG. 14, an embodiment of this application provides a detection apparatus 1400, applied to a first device and including:
a first sending module 1401, configured to send a sensing signal to a second device, where the sensing signal is used by the second device to perform detection, to obtain a measurement value corresponding to a measurement quantity of the sensing signal; where
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

Optionally, before the first sending module 1401 sends the sensing signal to the second device, the apparatus further includes:
a fifth sending module, configured to send first indication information to the second device, where the first indication information is used to indicate a measurement quantity of a sensing signal that needs to be measured by the second device.

Optionally, the measurement quantity further includes:
related information of a target event; where
the related information of the target event is information that can be detected or sensed when the target event occurs.

Optionally, the first transform includes fast Fourier transform FFT and/or wavelet transform; where
an operation result of the FFT includes at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; where
N and M are integers greater than or equal to 1.

Optionally, before the first sending module 1401 sends the sensing signal to the second device, the apparatus further includes:
a fourth determining module, configured to determine configuration information of the sensing signal.

Optionally, the fourth determining module is further configured to implement at least one of the following:
receiving second configuration information of the sensing signal that is sent by a first core network device; and
determining first configuration information of the sensing signal based on first information; where
the first information includes at least one of the following:
   a first sensing requirement;
   first recommendation information of the configuration information, where the first recommendation information is determined by the first core network device based on the first sensing requirement; and
   second recommendation information of the configuration information, where the second recommendation information is sent by the second device to the first device.

Optionally, after the fourth determining module determines the configuration information of the sensing signal, the apparatus further includes:
a sixth sending module, configured to send second indication information to the second device; where
the second indication information includes at least one of the first configuration information of the sensing signal and the first sensing requirement.

Optionally, the first sensing requirement is sent by the first core network device to the first device.

Optionally, after the first sending module 1401 sends the sensing signal to the second device, the apparatus further includes one of the following:
a second receiving module, configured to: receive first data sent by the second device, and forward the first data to a first core network device;
a third receiving module, configured to: receive first data sent by the second device, determine a sensing result based on the first data, and send the sensing result to the first core network device; and
a fourth receiving module, configured to: receive the sensing result sent by the second device, and forward the sensing result to the first core network device; where
the first data includes at least one of the following: the measurement value of the measurement quantity and a target label corresponding to the measurement value of the measurement quantity; where
the target label includes at least one of the following:
   a time label, where the time label is a subframe, a frame, a symbol, or a fixed time interval;
   a frequency label, where the frequency label is at least one subcarrier, a resource element RE, a physical resource block PRB, a bandwidth part BWP, or a carrier;
   a location label, where the location label is absolute location information of the second device or the first device or relative location information of the second device or the first device relative to a target reference point;
   a cell label, where the cell label is cell ID-related information or transmission and receiving point TRP information associated with the second device or cell ID-related or TRP information associated with the first device; and
   an antenna label, where the antenna label is a receive antenna of the second device, a receive channel of the second device, a receive antenna port of the second device, a transmit antenna of the first device, a transmit antenna channel of the first device, or a transmit antenna port of the first device.

Optionally, an embodiment of this application further provides a device. The device is a first device, and includes a processor, a memory, and a program or an instruction that is stored in the memory and that can be run on the processor. When the program or the instruction is executed by the processor, the processes of the method of the detection method applied to a first device side are implemented, and a same technical effect can be achieved. To avoid repetition, details are not described herein again.

An embodiment of this application further provides a readable storage medium. The computer-readable storage medium stores a program or an instruction, and when the program or the instruction is executed by a processor, the processes of the method of the detection method applied to a first device side are implemented, and a same technical effect can be achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a device. The device is a first device, and includes a processor and a communication interface. The communication interface is configured to send a sensing signal to a second device, where the sensing signal is used by the second device to perform detection, to obtain a measurement value corresponding to a measurement quantity of the sensing signal.

The measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

This device embodiment is corresponding to the foregoing method embodiment applied to the first device side. Each implementation process and implementation of the foregoing method embodiment may be applicable to this device embodiment, and a same technical effect can be achieved.

Specifically, an embodiment of this application further provides a device. The device is a first device. Specifically, for a structure of the first device, refer to the structure in FIG. 11 or FIG. 12. Details are not described herein again.

Specifically, the processor invokes an instruction or a program in the memory to perform the methods performed by the modules shown in FIG. 14, and a same technical effect is achieved. To avoid repetition, details are not described herein again.

As shown in FIG. 15, an embodiment of this application provides a photographing method, including:

Step 1501: The first device sends the first indication information to the second device.

The first indication information is used to indicate a measurement quantity of a sensing signal that needs to be measured by the second device; and
the measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

Optionally, the measurement quantity further includes:
related information of a target event; where
the related information of the target event is information that can be detected or sensed when the target event occurs.

Optionally, the first transform includes fast Fourier transform FFT and/or wavelet transform; where
an operation result of the FFT includes at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; where
N and M are integers greater than or equal to 1.

Optionally, before the first core network device sends the first indication information to the first device or the second device, the method further includes:
sending, by the first core network device, first sensing information to the first device and/or the second device; where
the first sensing information includes at least one of a first sensing requirement and configuration information of the sensing signal.

Optionally, the configuration information of the sensing signal includes second configuration information of the sensing signal.

A manner of determining the second configuration information of the sensing signal includes:
determining the second configuration information of the sensing signal based on second information; where
the second information includes at least one of the following:
   the first sensing requirement;
   sensing capability information sent by the second device;
   sensing capability information sent by the first device;
   third recommendation information of the configuration information, where the third recommendation information is determined by the first device based on the first sensing requirement and sent to the first core network device;
   fourth recommendation information of the configuration information, where the fourth recommendation information is determined by the second device based on the first sensing requirement and sent to the first core network device; and
   fifth recommendation information of the configuration information, where the fifth recommendation information is sent by the second device to the first core network device.

Optionally, the method further includes:
receiving a first sensing requirement sent by the second device, the first device, or a second core network device.

Optionally, after the sending, by a first core network device, first indication information to a first device or a second device, the method further includes one of the following:
receiving first data sent by the first device; and
receiving a sensing result of the sensing signal that is sent by the first device; where
the first data includes at least one of the following: the measurement value of the measurement quantity and a target label corresponding to the measurement value of the measurement quantity; where
the target label includes at least one of the following:
   a time label, where the time label is a subframe, a frame, a symbol, or a fixed time interval;
   a frequency label, where the frequency label is at least one subcarrier, a resource element RE, a physical resource block PRB, a bandwidth part BWP, or a carrier;
   a location label, where the location label is absolute location information of the second device or the first device or relative location information of the second device or the first device relative to a target reference point;
   a cell label, where the cell label is cell ID-related information or transmission and receiving point TRP information associated with the second device or cell ID-related or TRP information associated with the first device; and
   an antenna label, where the antenna label is a receive antenna of the second device, a receive channel of the second device, a receive antenna port of the second device, a transmit antenna of the first device, a transmit antenna channel of the first device, or a transmit antenna port of the first device.

Optionally, after the receiving first data sent by the first device, the method further includes:
determining a sensing result based on the first data; and
sending the sensing result to the second device or a second core network device.

Optionally, after the receiving a sensing result of the sensing signal that is sent by the first device, the method further includes:
sending the sensing result to the second device or a second core network device.

It should be noted that all descriptions of the first core network device in the foregoing embodiments are applicable to the embodiment of the detection method, and a same technical effect can be achieved. Details are not provided herein again.

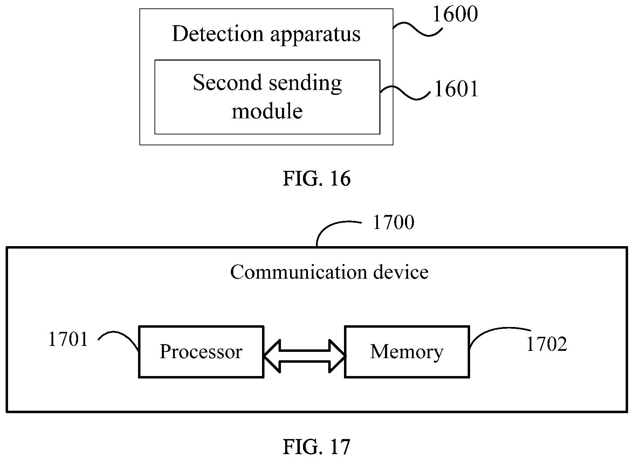

As shown in FIG. 16, an embodiment of this application further provides a detection apparatus 1600, applied to a first core network device and including:
a second sending module 1601, configured to send first indication information to a first device or a second device; where
the first indication information is used to indicate a measurement quantity of a sensing signal that needs to be measured by the second device; and
the measurement quantity includes at least one of the following:
   a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
   a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
   a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

Optionally, the measurement quantity further includes:
related information of a target event; where
the related information of the target event is information that can be detected or sensed when the target event occurs.

Optionally, the first transform includes fast Fourier transform FFT and/or wavelet transform; where
an operation result of the FFT includes at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; where
N and M are integers greater than or equal to 1.

Optionally, before the second sending module 1601 sends the first indication information to the first device or the second device, the apparatus further includes:
a seventh sending module, configured to send first sensing information to the first device and/or the second device; where
the first sensing information includes at least one of a first sensing requirement and configuration information of the sensing signal.

Optionally, the configuration information of the sensing signal includes second configuration information of the sensing signal.

A manner of determining the second configuration information of the sensing signal includes:
determining the second configuration information of the sensing signal based on second information; where
the second information includes at least one of the following:
   the first sensing requirement;
   sensing capability information sent by the second device;
   sensing capability information sent by the first device;
   third recommendation information of the configuration information, where the third recommendation information is determined by the first device based on the first sensing requirement and sent to the first core network device;
   fourth recommendation information of the configuration information, where the fourth recommendation information is determined by the second device based on the first sensing requirement and sent to the first core network device; and
   fifth recommendation information of the configuration information, where the fifth recommendation information is sent by the second device to the first core network device.

Optionally, the apparatus further includes:
a fifth receiving module, configured to receive a first sensing requirement sent by the second device, the first device, or a second core network device.

Optionally, after the second sending module 1601 sends the first indication information to the first device or the second device, the apparatus further includes one of the following:
a sixth receiving module, configured to receive first data sent by the first device; and
a seventh receiving module, configured to receive a sensing result of the sensing signal that is sent by the first device; where
the first data includes at least one of the following: the measurement value of the measurement quantity and a target label corresponding to the measurement value of the measurement quantity; where
the target label includes at least one of the following:
   a time label, where the time label is a subframe, a frame, a symbol, or a fixed time interval;
   a frequency label, where the frequency label is at least one subcarrier, a resource element RE, a physical resource block PRB, a bandwidth part BWP, or a carrier;
   a location label, where the location label is absolute location information of the second device or the first device or relative location information of the second device or the first device relative to a target reference point;
   a cell label, where the cell label is cell ID-related information or transmission and receiving point TRP information associated with the second device or cell ID-related or TRP information associated with the first device; and
   an antenna label, where the antenna label is a receive antenna of the second device, a receive channel of the second device, a receive antenna port of the second device, a transmit antenna of the first device, a transmit antenna channel of the first device, or a transmit antenna port of the first device.

Optionally, after the sixth receiving module receives the first data sent by the first device, the apparatus further includes:
a fifth determining module, configured to determine a sensing result based on the first data; and
an eighth sending module, configured to send the sensing result to the second device or a second core network device.

Optionally, after the seventh receiving module receives the sensing result of the sensing signal that is sent by the first device, the apparatus further includes:
a ninth sending module, configured to send the sensing result to the second device or a second core network device.

It should be noted that all descriptions of the first core network device in the foregoing embodiments are applicable to the embodiment of the detection method, and a same technical effect can be achieved. Details are not provided herein again.

Optionally, an embodiment of this application further provides a device. The device is a first core network device, and includes a processor, a memory, and a program or an instruction that is stored in the memory and that can be run on the processor. When the program or the instruction is executed by the processor, the processes of the embodiment of the detection method applied to a first core network device side are implemented, and a same technical effect can be achieved. To avoid repetition, details are not described herein again.

An embodiment of this application further provides a readable storage medium. The computer-readable storage medium stores a program or an instruction, and when the program or the instruction is executed by a processor, the processes of the embodiment of the detection method applied to a first core network device side are implemented, and a same technical effect can be achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a device. The device is a first core network device, and includes a processor and a communication interface, and the communication interface is configured to send first indication information to a first device or a second device.

The first indication information is used to indicate a measurement quantity of a sensing signal that needs to be measured by the second device; and
the measurement quantity includes at least one of the following:
a first measurement quantity, where the first measurement quantity includes at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, where the second measurement quantity includes at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, where the third measurement quantity includes at least one of the following: I-channel data of the frequency-domain channel response, Q-channel data of the frequency-domain channel response, and a result of performing an operation on the I-channel data of the frequency-domain channel response and Q-channel data of the frequency-domain channel response.

This device embodiment is corresponding to the foregoing method embodiment applied to a first core network device side. Each implementation process and implementation of the foregoing method embodiment may be applicable to this device embodiment, and a same technical effect can be achieved.

Specifically, an embodiment of this application further provides a device. The device is a first core network device. Specifically, for a structure of the first core network device, refer to the structure of the base station in FIG. 11. Details are not described herein again.

Specifically, a processor invokes an instruction or a program in the memory to perform the method performed by the modules shown in FIG. 16, and a same technical effect is achieved. To avoid repetition, details are not described herein again.

Optionally, as shown in FIG. 17, an embodiment of this application further provides a communication device 1700, including a processor 1701, a memory 1702, and a program or an instruction that is stored in the memory 1702 and that can be run on the processor 1701. For example, when the communication device 1700 is a second device, the program or the instruction is executed by the processor 1701 to implement the processes of the embodiment of the foregoing detection method, and a same technical effect can be achieved. When the communication device 1700 is a first device, the program or the instruction is executed by the processor 1701 to implement the processes of the embodiment of the foregoing detection method, and a same technical effect can be achieved. When the communication device 1700 is a first core network device, the program or the instruction is executed by the processor 1701 to implement the processes of the embodiment of the foregoing detection method, and a same technical effect can be achieved. To avoid repetition, details are not described herein again.

The first device and the second device in the embodiments of this application each may be a terminal, and the terminal may be a device that provides voice and/or other service data connectivity for a user, a handheld device with a wireless connection function, or another processing device connected to a wireless modem. In different systems, names of terminal devices may also be different. For example, in an 5G system, the terminal device may be referred to as User Equipment (User Equipment, UE). A wireless terminal may communicate with one or more core networks by using a radio access network (Radio Access Network, RAN). The wireless terminal may be a terminal device, such as a mobile phone (or referred to as a "cellular" phone) and a computer having a mobile terminal. For example, the wireless terminal may be a portable, pocket-sized, handheld, computer-built-in, or in-vehicle mobile apparatus, and exchange language and/or data with the radio access network, For example, personal communication service (Personal Communication Service, PCS) telephone, cordless telephone, session initiation protocol (Session Initiation Protocol, SIP) telephone, wireless local loop (Wireless Local Loop, WLL) station, personal digital assistant (Personal Digital Assistant, PDA) and other devices. The wireless terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), and a user device (user device). This is not limited in this embodiment of this application.

The first device and the second device in the embodiments of this application each may be a base transceiver station (Base Transceiver Station, BTS) in a global system for mobile communication (Global System of Mobile communication, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (Evolutional NodeB, eNB or eNodeB), a relay station, or an access point in LTE, or a base station in a future 5G network, or the like. This is not limited herein.

One or more antennas may be separately used between the first device and the second device to perform multi input multi output (Multi Input Multi Output, MIMO) transmission. The MIMO transmission may be single user MIMO (Single User MIMO, SU-MIMO) or multiple user MIMO (Multiple User MIMO, MU-MIMO). Based on a form and a quantity of antenna combinations, MIMO transmission may be two-dimensional multi input multi output (2 Dimension MIMO, 2D-MIMO), three-dimensional multi input multi output (3 Dimension MIMO, 3D-MIMO), full-dimensional multi input multi output (Full Dimension MIMO, FD-MIMO), massive multi input multi output (massive-MIMO), diversity transmission, precoding transmission, beamforming transmission, or the like.

An embodiment of this application further provides a chip, the chip includes a processor and a communication interface, the communication interface is coupled to the processor, and the processor is configured to run programs or instructions to implement each process of the embodiment of the foregoing detection method, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a communication device, configured to perform the processes of the embodiment of the foregoing detection method, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A detection method, comprising:
detecting, by a second device, a sensing signal sent by a first device, to obtain a measurement value corresponding to a measurement quantity of the sensing signal; wherein
the measurement quantity comprises at least one of the following:
a first measurement quantity, wherein the first measurement quantity comprises at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, wherein the second measurement quantity comprises at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, wherein the third measurement quantity comprises at least one of the following: I-channel data of the frequency-domain channel response, Q-channel data of the frequency-domain channel response, and a result of performing an operation on the I-channel data of the frequency-domain channel response and Q-channel data of the frequency-domain channel response.

2. The method according to claim 1, before the detecting, by a second device, a sensing signal sent by a first device, further comprising at least one of the following:
receiving, by the second device, first indication information sent by the first device or a first core network device, wherein the first indication information is used to indicate a measurement quantity of a sensing signal that needs to be measured by the second device; and
determining, based on a first sensing requirement, a measurement quantity of the sensing signal that needs to be measured by the second device.

3. The method according to claim 1 or 2, wherein the measurement quantity further comprises:
related information of a target event; wherein
the related information of the target event is information that can be detected or sensed when the target event occurs.

4. The method according to claim 1, wherein the first transform comprises fast Fourier transform FFT and/or wavelet transform; and
an operation result of the FFT comprises at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; wherein
N and M are integers greater than or equal to 1.

5. The method according to claim 1, before the detecting, by a second device, a sensing signal sent by a first device, further comprising:
determining, by the second device, configuration information of the sensing signal.

6. The method according to claim 5, wherein the determining, by the second device, configuration information of the sensing signal comprises at least one of the following:
receiving, by the second device, first configuration information of the sensing signal, wherein the first configuration information is sent by the first device;
receiving, by the second device, second configuration information of the sensing signal, wherein the second configuration information is sent by a first core network device; and
determining, by the second device, third configuration information of the sensing signal based on a first sensing requirement.

7. The method according to claim 5 or 6, wherein the configuration information of the sensing signal comprises at least one of the following parameters:
a waveform of the sensing signal;
a subcarrier spacing of the sensing signal;
a guard interval of the sensing signal;
a bandwidth of the sensing signal;
burst duration of the sensing signal;
a time-domain interval of the sensing signal;
transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

8. The method according to claim 2 or 6, wherein the first sensing requirement is sent by the first device or the first core network device to the second device; and/or
the first sensing requirement is associated with at least one of the following:
a sensing object;
a sensing quantity;
a sensing indicator; and
location information.

9. The method according to claim 1, after the detecting, by a second device, a sensing signal sent by a first device, to obtain a measurement value corresponding to a measurement quantity of the sensing signal, further comprising any one of the following:
sending, by the second device, first data to the first device or the first core network device; and
determining, by the second device, a sensing result based on the measurement value; wherein
the first data comprises at least one of the following: the measurement value of the measurement quantity and a target label corresponding to the measurement value of the measurement quantity; wherein
the target label comprises at least one of the following:
a time label, wherein the time label is a subframe, a frame, a symbol, or a fixed time interval;
a frequency label, wherein the frequency label is at least one subcarrier, a resource element RE, a physical resource block PRB, a bandwidth part BWP, or a carrier;
a location label, wherein the location label is absolute location information of the second device or the first device or relative location information of the second device or the first device relative to a target reference point;
a cell label, wherein the cell label is cell ID-related information or transmission and receiving point TRP information associated with the second device or cell ID-related or TRP information associated with the first device; and
an antenna label, wherein the antenna label is a receive antenna of the second device, a receive channel of the second device, a receive antenna port of the second device, a transmit antenna of the first device, a transmit antenna channel of the first device, or a transmit antenna port of the first device.

10. The method according to claim 9, after the determining, by the second device, a sensing result based on the measurement value, further comprising:
sending, by the second device, the sensing result to the first device.

11. A detection method, comprising:
sending, by a first device, a sensing signal to a second device, wherein the sensing signal is used by the second device to perform detection, to obtain a measurement value corresponding to a measurement quantity of the sensing signal; wherein
the measurement quantity comprises at least one of the following:
a first measurement quantity, wherein the first measurement quantity comprises at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, wherein the second measurement quantity comprises at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, wherein the third measurement quantity comprises at least one of the following: I-channel data of the frequency-domain channel response, Q-channel data of the frequency-domain channel response, and a result of performing an operation on the I-channel data of the frequency-domain channel response and Q-channel data of the frequency-domain channel response.

12. The method according to claim 11, before the sending, by a first device, a sensing signal to a second device, further comprising:
sending, by the first device, first indication information to the second device, wherein the first indication information is used to indicate a measurement quantity of a sensing signal that needs to be measured by the second device.

13. The method according to claim 11 or 12, the measurement quantity further comprises:
related information of a target event; wherein
the related information of the target event is information that can be detected or sensed when the target event occurs.

14. The method according to claim 11, wherein the first transform comprises fast Fourier transform FFT and/or wavelet transform; and
an operation result of the FFT comprises at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; wherein
N and M are integers greater than or equal to 1.

15. The method according to claim 11, before the sending, by a first device, a sensing signal to a second device, further comprising:
determining, by the first device, configuration information of the sensing signal.

16. The method according to claim 15, wherein the determining, by the first device, configuration information of the sensing signal comprises at least one of the following:
receiving, by the first device, second configuration information of the sensing signal that is sent by a first core network device; and
determining, by the first device, first configuration information of the sensing signal based on first information; wherein
the first information comprises at least one of the following:
a first sensing requirement;
first recommendation information of the configuration information, wherein the first recommendation information is determined by the first core network device based on the first sensing requirement; and
second recommendation information of the configuration information, wherein the second recommendation information is sent by the second device to the first device.

17. The method according to claim 16, after the determining, by the first device, configuration information of the sensing signal, further comprising:
sending, by the first device, second indication information to the second device; wherein
the second indication information comprises at least one of the first configuration information of the sensing signal and the first sensing requirement.

18. The method according to claim 16 or 17, wherein the first sensing requirement is sent by the first core network device to the first device.

19. The method according to claim 11, after the sending, by a first device, a sensing signal to a second device, further comprising one of the following:
receiving, by the first device, first data sent by the second device, and forwarding the first data to a first core network device;
receiving, by the first device, first data sent by the second device, determining a sensing result based on the first data, and sending the sensing result to the first core network device; and
receiving, by the first device, a sensing result sent by the second device, and forwarding the sensing result to the first core network device; wherein
the first data comprises at least one of the following: the measurement value of the measurement quantity and a target label corresponding to the measurement value of the measurement quantity; wherein
the target label comprises at least one of the following:
a time label, wherein the time label is a subframe, a frame, a symbol, or a fixed time interval;
a frequency label, wherein the frequency label is at least one subcarrier, a resource element RE, a physical resource block PRB, a bandwidth part BWP, or a carrier;
a location label, wherein the location label is absolute location information of the second device or the first device or relative location information of the second device or the first device relative to a target reference point;
a cell label, wherein the cell label is cell ID-related information or transmission and receiving point TRP information associated with the second device or cell ID-related or TRP information associated with the first device; and
an antenna label, wherein the antenna label is a receive antenna of the second device, a receive channel of the second device, a receive antenna port of the second device, a transmit antenna of the first device, a transmit antenna channel of the first device, or a transmit antenna port of the first device.

20. A detection method, comprising:
sending, by a first core network device, first indication information to a first device or a second device; wherein
the first indication information is used to indicate a measurement quantity of a sensing signal that needs to be measured by the second device; and
the measurement quantity comprises at least one of the following:
a first measurement quantity, wherein the first measurement quantity comprises at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, wherein the second measurement quantity comprises at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, wherein the third measurement quantity comprises at least one of the following: I-channel data of the frequency-domain channel response, Q-channel data of the frequency-domain channel response, and a result of performing an operation on the I-channel data of the frequency-domain channel response and Q-channel data of the frequency-domain channel response.

21. The method according to claim 20, wherein the measurement quantity further comprises:
related information of a target event; wherein
the related information of the target event is information that can be detected or sensed when the target event occurs.

22. The method according to claim 20, wherein the first transform comprises fast Fourier transform FFT and/or wavelet transform; and
an operation result of the FFT comprises at least one of the following:
a frequency value with a largest amplitude;
an amplitude value corresponding to the frequency value with the largest amplitude;
first N frequency values with a large amplitude that are obtained after an FFT operation;
amplitude s corresponding to first M frequency values with a large amplitude that are obtained after an FFT operation; and
at least one group of frequency values and amplitude values; wherein
N and M are integers greater than or equal to 1.

23. The method according to claim 20, before the sending, by a first core network device, first indication information to a first device or a second device, further comprising:
sending, by the first core network device, first sensing information to the first device and/or the second device; wherein
the first sensing information comprises at least one of a first sensing requirement and configuration information of the sensing signal.

24. The method according to claim 23, wherein the configuration information of the sensing signal comprises second configuration information of the sensing signal; and
a manner of determining the second configuration information of the sensing signal comprises:
determining the second configuration information of the sensing signal based on second information; wherein
the second information comprises at least one of the following:
the first sensing requirement;
sensing capability information sent by the second device;
sensing capability information sent by the first device;
third recommendation information of the configuration information, wherein the third recommendation information is determined by the first device based on the first sensing requirement and sent to the first core network device;
fourth recommendation information of the configuration information, wherein the fourth recommendation information is determined by the second device based on the first sensing requirement and sent to the first core network device; and
fifth recommendation information of the configuration information, wherein the fifth recommendation information is sent by the second device to the first core network device.

25. The method according to claim 23 or 24, further comprising:
receiving a first sensing requirement sent by the second device, the first device, or a second core network device.

26. The method according to claim 20, after the sending, by a first core network device, first indication information to a first device or a second device, further comprising one of the following:
receiving first data sent by the first device; and
receiving a sensing result of the sensing signal that is sent by the first device; wherein
the first data comprises at least one of the following: the measurement value of the measurement quantity and a target label corresponding to the measurement value of the measurement quantity; wherein
the target label comprises at least one of the following:
a time label, wherein the time label is a subframe, a frame, a symbol, or a fixed time interval;
a frequency label, wherein the frequency label is at least one subcarrier, a resource element RE, a physical resource block PRB, a bandwidth part BWP, or a carrier;
a location label, wherein the location label is absolute location information of the second device or the first device or relative location information of the second device or the first device relative to a target reference point;
a cell label, wherein the cell label is cell ID-related information or transmission and receiving point TRP information associated with the second device or cell ID-related or TRP information associated with the first device; and
an antenna label, wherein the antenna label is a receive antenna of the second device, a receive channel of the second device, a receive antenna port of the second device, a transmit antenna of the first device, a transmit antenna channel of the first device, or a transmit antenna port of the first device.

27. The method according to claim 26, after the receiving first data sent by the first device, further comprising:
determining a sensing result based on the first data; and
sending the sensing result to the second device or a second core network device.

28. The method according to claim 26, after the receiving a sensing result of the sensing signal that is sent by the first device, further comprising:
sending the sensing result to the second device or a second core network device.

29. A detection apparatus, applied to a second device, comprising:
a detection module, configured to detect a sensing signal sent by a first device, to obtain a measurement value corresponding to a measurement quantity of the sensing signal; wherein
the measurement quantity comprises at least one of the following:
a first measurement quantity, wherein the first measurement quantity comprises at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, wherein the second measurement quantity comprises at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, wherein the third measurement quantity comprises at least one of the following: I-channel data of the frequency-domain channel response, Q-channel data of the frequency-domain channel response, and a result of performing an operation on the I-channel data of the frequency-domain channel response and Q-channel data of the frequency-domain channel response.

30. A detection apparatus, applied to a first device, comprising:
a first sending module, configured to send a sensing signal to a second device, wherein the sensing signal is used by the second device to perform detection, to obtain a measurement value corresponding to a measurement quantity of the sensing signal; wherein
the measurement quantity comprises at least one of the following:
a first measurement quantity, wherein the first measurement quantity comprises at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, wherein the second measurement quantity comprises at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, wherein the third measurement quantity comprises at least one of the following: I-channel data of the frequency-domain channel response, Q-channel data of the frequency-domain channel response, and a result of performing an operation on the I-channel data of the frequency-domain channel response and Q-channel data of the frequency-domain channel response.

31. A detection apparatus, applied to a first core network device, comprising:
a second sending module, configured to send first indication information to a first device or a second device; wherein
the first indication information is used to indicate a measurement quantity of a sensing signal that needs to be measured by the second device; and
the measurement quantity comprises at least one of the following:
a first measurement quantity, wherein the first measurement quantity comprises at least one of the following: a frequency-domain channel response, an amplitude of the frequency-domain channel response, a phase of the frequency-domain channel response, an operation result of first transform corresponding to the frequency-domain channel response, an operation result of first transform corresponding to the amplitude of the frequency-domain channel response, and an operation result of first transform corresponding to the phase of the frequency-domain channel response;
a second measurement quantity, wherein the second measurement quantity comprises at least one of the following: an operation result of performing a mathematical operation on frequency-domain channel responses of at least two receive antennas, an amplitude of the operation result of performing the mathematical operation on the frequency-domain channel responses of the at least two receive antennas, a phase of the operation result of performing the mathematical operation on the frequency-domain channel responses of the at least two receive antennas, an operation result of first transform corresponding to the operation result of performing the mathematical operation on the frequency-domain channel responses of the at least two receive antennas, an operation result of first transform corresponding to the amplitude of the operation result of performing the mathematical operation on the frequency-domain channel responses of the at least two receive antennas, and an operation result of first transform corresponding to the phase of the operation result of performing the mathematical operation on the frequency-domain channel responses of the at least two receive antennas; and
a third measurement quantity, wherein the third measurement quantity comprises at least one of the following: I-channel data of the frequency-domain channel response, Q-channel data of the frequency-domain channel response, and a result of performing an operation on the I-channel data of the frequency-domain channel response and Q-channel data of the frequency-domain channel response.

32. A device, comprising a processor, a memory, and a program or an instruction that is stored in the memory and that can be run on the processor, wherein when the program or the instruction is executed by the processor, steps of the detection method according to any one of claims 1 to 28 are implemented.

33. A readable storage medium, wherein the readable storage medium stores a program or an instruction, and when the program or the instruction is executed by a processor, steps of the detection method according to any one of claims 1 to 28 are implemented.
